(19) Europäisches Patentamt
European Patent Office
Office européen des brevets

(11) **EP 4 605 457 B1**

(12) **EUROPEAN PATENT SPECIFICATION**

(45) Date of publication and mention of the grant of the patent:
**30.09.2026 Bulletin 2026/40**

(21) Application number: **23790614.4**

(22) Date of filing: **16.10.2023**

(51) International Patent Classification (IPC):
***C08K 3/22*** *(2006.01)* ***C08K 7/00*** *(2006.01)*
***C08K 7/20*** *(2006.01)* ***C08K 9/02*** *(2006.01)*
***C08L 23/06*** *(2006.01)* ***C08L 25/06*** *(2006.01)*
***G01S 7/48*** *(2006.01)* ***G01S 17/89*** *(2020.01)*
*C08K 3/013* *(2018.01)* *C08L 23/12* *(2006.01)*
*C08K 3/08* *(2006.01)*

(52) Cooperative Patent Classification (CPC):
(C-Sets available)
**C08K 7/20; C08K 3/22; C08K 7/00; C08K 9/02; C08L 23/06; C08L 25/06; G01S 7/4808; G01S 17/89;** C08K 3/013; C08K 2003/0812; C08K 2003/0831; C08K 2003/085; C08K 2201/003; C08K 2201/016 (Cont.)

(86) International application number:
**PCT/EP2023/078665**

(87) International publication number:
**WO 2024/083736 (25.04.2024 Gazette 2024/17)**

(54) **PLASTIC PRODUCTS WITH RETROREFLECTIVE PROPERTIES AND LIDAR-DETECTABILITY**

KUNSTSTOFFPRODUKTE MIT RETROREFLEKTIERENDEN EIGENSCHAFTEN UND LIDAR-ERKENNBARKEIT

PRODUITS EN PLASTIQUE PRÉSENTANT DES PROPRIÉTÉS RÉTRORÉFLÉCHISSANTES ET UNE DÉTECTABILITÉ PAR LIDAR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.10.2022 EP 22202207**

(43) Date of publication of application:
**27.08.2025 Bulletin 2025/35**

(73) Proprietor: **Ink Invent IP B.V.**
**3433 PT Nieuwegein (NL)**

(72) Inventors:
- **KNOOTE, Jacques Arthur**
  **3433 PT Nieuwegein (NL)**
- **MIJNEN, Paul Willem**
  **3433 PT Nieuwegein (NL)**
- **KERRES, Harald Paul**
  **3433 PT Nieuwegein (NL)**
- **KNOOTE, Menno Arthur**
  **3433 PT Nieuwegein (NL)**
- **MOERENBURG, Joost**
  **3433 PT Nieuwegein (NL)**
- **SCHLIJPER, Ramon Maria Henricus**
  **3433 PT Nieuwegein (NL)**

(74) Representative: **Arnold & Siedsma**
**Bezuidenhoutseweg 57**
**2594 AC The Hague (NL)**

(56) References cited:
**US-A- 3 228 897**
**US-A1- 2005 245 645**
**US-A1- 2006 276 565**
**US-A1- 2009 214 827**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 4 605 457 B1**

(52) Cooperative Patent Classification (CPC): (Cont.)

C-Sets
**C08K 3/22, C08L 23/06;**
**C08K 7/00, C08L 23/06;**
**C08K 7/20, C08L 23/06;**
**C08K 7/20, C08L 23/12;**
**C08K 7/20, C08L 25/06;**
**C08K 9/02, C08L 23/06;**
**C08K 9/02, C08L 23/12;**
**C08L 23/06, C08L 23/04, C08K 7/20, C08K 3/08;**
**C08L 25/06, C08L 91/06, C08K 7/20, C08K 3/08**

## Description

### FIELD OF THE INVENTION

The invention relates to a three-dimensional plastic product with retroreflective properties and LIDAR-detectability and to processes for producing said three-dimensional plastic product. The invention further relates to a modified three-dimensional product comprising one or more of said three-dimensional plastic products with retroreflective properties and one or more further parts or components attached thereto, to a Laser Imaging Detection And Ranging (LIDAR) process of said three-dimensional plastic product or of said modified three-dimensional product, to the use of the three-dimensional plastic product in the form of a pellet or filament for the production of a ready-to-use three-dimensional plastic product and to further uses of said three-dimensional plastic product or of said modified three-dimensional product.

### BACKGROUND OF THE INVENTION

Retroreflective effects are used in a variety of applications. For example, to improve the visibility of road signs, road markers, textiles, cars, et cetera, under dark conditions, or simply to improve their visual appearance. Retroreflection occurs by the tandem action of refraction of the incident light through the upper surface of for example a spherical glass bead, internal reflection from the lower onside surface of the spherical glass bead and subsequent refraction of the light as it exits the upper surface of the spherical glass bead, travelling back to the direction from which the impinging light came.

The present invention concerns three-dimensional plastic products, such as for example vehicle parts. Being able to clearly identify objects, such as vehicles, during nighttime or in dimly-lit conditions is a challenge. Retroreflectivity could greatly improve the visibility and/or LIDAR-detectability of such objects. Vehicle parts, particularly automotive parts, typically have a very smooth surface with a glossy or semi-glossy appearance to make them appealing from an aesthetic point of view. Therefore, there is a need to provide three-dimensional plastic products having a smooth surface, particularly plastic vehicle parts, with retroreflective properties.

DE102016001026A1 discloses a raw material for 3D printing comprising a thermoplastic material and reflective or retroreflective glass beads. It is described in DE102016001026A1 that retroreflectivity is only observed if the retroreflective glass beads are located at the surface that receives light. If the retroreflective glass beads are covered with the thermoplastic material, the effect is extremely minimized or zero. It is described that retroreflective injection-molded plastic articles therefore are not common because the retroreflective glass beads are encased by the plastic. DE102016001026A1 further describes that a thermoplastic mixture comprising more than 50 wt.% of reflective glass beads resulted after 3D printing in a reflective object with reflective glass beads protruding from the surface of the object. The reflective glass beads protruding from the surface were not covered with thermoplastic material. Only filaments and 3D-printed objects wherein retroreflective glass beads protruded from the surface and wherein the glass beads protruding from the surface were not covered with thermoplastic material showed retroreflective properties. DE102016001026A1 only describes the use of retroreflective glass beads with a refractive index between 1.7 and 1.9, preferably hemispherically coated with a metallic coating.

WO2005/033194A1 concerns retroreflective polymeric compounds and articles made thereof. The compounds and articles include a thermoplastic polymer, glass beads and metallic flakes. At least part of the glass beads are hemispherically coated with a metallic coating. Example 1 discloses a composition comprising 1.76 wt.% carbon black pigment, 16 wt.% of aluminium coated $BaTiO_3$ microspheres (38 $\mu$m; Prizmalite Industries), 4 wt.% of uncoated $BaTiO_3$ microspheres (8.5 $\mu$m; Prizmalite Industries), 77.36 wt.% ASA thermoplastic polymer and 0.88 wt.% of Sparkle Silver aluminium flakes of an unknown size (Silberline Mfg. Co.).

It is described in WO2005/033194A1 that pure barium titanate is a clear crystalline ceramic having a refractive index of 2.40 and that $BaTiO_3$ microbeads are dense clear spheres, consisting primarily of $BaTiO_3$, but also containing substantial concentrations of $SiO_2$, $B_2O_3$ and CaO, as well as traces of other metal oxides. Hence, the $BaTiO_3$ microbeads do not have a refractive index of 2.40. Prizmalite Industries only offers $BaTiO_3$ microbeads with a refractive index of 1.9 that are hemispherically coated with an aluminium coating (product P2453BTA). It is described in the *Guidelines for using Prizmalite® P2453BTA retro reflective spheres,* distributed by Cospheric LLC, that *"The aluminium coating on half the barium titanate spheres provides the mechanism for retroreflectivity. The light passes through the clear half of the sphere and "bounces" off the aluminum coating. The combination of barium titanate's RI of 1.9 and the hemispheric coating of aluminum creates retroreflectivity and accounts for the more intense and direct light refraction achieved. "* It is further described in these guidelines that *"these coatings have been designed to promote the migration of the microspheres to the surface of the inks or coatings in which they are incorporated. The concept of retroreflection depends on the passage of the light through the clear, uncoated hemisphere of the glass sphere. If the sphere is not physically situated for light to pass through it, no retro reflectivity can result. Prizmalite's coatings create a tension between the coating and its surrounding resin that forces the sphere to "pop up" to the surface, thus maximizing its potential exposure to light. Coating the spheres enhances the retro reflective effect by achieving this placement and reduces the amount of spheres required because the*

*coated spheres perform so much more efficiently than uncoated ones.*"

The present inventors have found that using spherical glass beads with a refractive index of 1.9 or lower does not provide three-dimensional plastic products with sufficient retroreflective properties in plastic products wherein the spherical glass beads do not protrude from the plastic or polymer matrix, not even when combined with pigment flakes.

As shown in the experimental section, it was found that using a hemispheric aluminium coating on the spherical glass beads with a refractive index of 1.9 in plastic products wherein the spherical glass beads do not protrude from the plastic or polymer matrix worsens the retroreflective properties.

It is an object of the invention to provide three-dimensional plastic products with improved retroreflective properties and/or improved LIDAR-detectability.

It is a further object of the invention to provide three-dimensional plastic products with improved retroreflective properties and/or improved LIDAR-detectability, wherein the three-dimensional plastic products comprise retroreflective spherical glass beads that do not protrude from the plastic matrix.

It is another object of the invention to provide three-dimensional plastic products with smooth, glossy or semi-glossy retroreflective surfaces and/or smooth, glossy or semi-glossy LIDAR-detectable surfaces.

## SUMMARY OF THE INVENTION

The inventors have unexpectedly established that the objectives can be met by employing spherical glass beads with a higher refractive index combined with pigment flakes at a certain weight fraction in the continuous plastic matrix. The inventors have further found that applying a hemispheric light-reflective coating onto the spherical glass beads has an adverse effect on retroreflection/LIDAR-detectability in three-dimensional plastic products wherein the spherical glass beads do not protrude from the plastic matrix.

Accordingly, in a first aspect the invention provides a three-dimensional plastic product (1) with an outer surface (A), wherein at least part (B) of the outer surface (A) has retroreflective properties, wherein said three-dimensional plastic product (1) consists, based on the total weight of the three-dimensional plastic product (1), of:

- 25 - 95.9 wt.% of a polymer chosen from thermoplastic and thermoset polymers;
- 4 - 70 wt.% of spherical glass beads, wherein said spherical glass beads have a median particle diameter D50, as measured with laser diffraction, between 1 and 150 $\mu$m, and a refractive index, measured at a wavelength $\lambda$ of 589 nm, between 2.0 and 2.8, wherein the spherical glass beads are not hemispherically coated with a light-reflective coating;
- 0.1 - 15 wt.% of pigment flakes chosen from the group consisting of metallic pigment flakes, pearlescent pigment flakes or a combination thereof, said pigment flakes having a median diameter, as measured with laser diffraction, between 1 and 75 $\mu$m; and
- 0 - 15 wt.% of one or more further ingredients,

wherein the minimum size of the three-dimensional plastic product (1) in all directions is at least 500 $\mu$m, and wherein part (B) of the outer surface (A) with retroreflective properties comprises one or more outer retroreflective surface parts (C) wherein the spherical glass beads do not protrude from the polymer matrix.

In a second aspect, a modified three-dimensional product (2) is provided comprising:

- one or more three-dimensional plastic products (1) according to the first aspect and one or more further parts or components (3) attached thereto; or
- one or more further parts or components (3) and one or more three-dimensional plastic products (1) according to the first aspect attached thereto,

with the proviso that at least part of the one or more outer retroreflective surface parts (C) of the three-dimensional plastic products (1) according to the first aspect is not covered by the one or more further parts or components (3).

In a third aspect, the invention provides a process for producing the three-dimensional plastic product (1) with retroreflective properties according to the first aspect, wherein the polymer is a thermoplastic polymer, said process comprising the steps of:

(a) providing the thermoplastic polymer, the spherical glass beads, the pigments flakes and the optional further ingredients;
(b) compounding the ingredients provided in step (a) at a temperature above the melting point of the thermoplastic polymer;
(c) providing the mixture obtained in step (b) into a mould or extruding the mixture obtained in step (b); and
(d) cooling the mixture in the mould to a temperature below the melting point of the thermoplastic polymer and

removing the three-dimensional plastic product (1) with retroreflective properties from the mould or cooling the extrudate to a temperature below the melting point of the thermoplastic polymer to provide the three-dimensional plastic product (1) with retroreflective properties.

In a fourth aspect, the invention provides a process for producing the three-dimensional plastic product (1) with retroreflective properties according to the first aspect, wherein the polymer is a thermoset polymer, said process comprising the steps of:

(a) providing a thermoset curable resin, the spherical glass beads, the pigments flakes and the optional further ingredients;
(b) mixing the ingredients provided in step (a);
(c) providing the mixture obtained in step (b) into a mould;
(d) curing the mixture in the mould to provide the three-dimensional plastic product (1) with retroreflective properties; and
(e) removing the three-dimensional plastic product (1) with retroreflective properties from the mould.

In a fifth aspect, the invention provides a Laser Imaging Detection And Ranging (LIDAR) process of the three-dimensional plastic product (1) according to the first aspect or of the modified three-dimensional product (2) according to the second aspect, said process comprising the steps of:

(i) providing a LIDAR device comprising a source of electromagnetic radiation, a receiver and optionally a Global Positioning System (GPS);
(ii) transmitting electromagnetic radiation from the source of electromagnetic radiation of the LIDAR device to the three-dimensional plastic product (1) or to the modified three-dimensional product (2);
(iii) scanning the electromagnetic radiation reflected by the three-dimensional plastic product (1) or by the modified three-dimensional product (2) with the receiver of the LIDAR device; and
(iv) computing from the differences between the transmitted electromagnetic radiation and the scanned reflected electromagnetic radiation, preferably as a function of time, one or more of:

- the distance between the three-dimensional plastic product (1) or the modified three-dimensional product (2) and the LIDAR device;
- the acceleration of the three-dimensional plastic product (1) or of the modified three-dimensional product (2);
- the deceleration of the three-dimensional plastic product (1) or of the modified three-dimensional product (2);
- the direction of movement of the three-dimensional plastic product (1) or of the modified three-dimensional product (2);
- the speed of the three-dimensional plastic product (1) or of the modified three-dimensional product (2), preferably the speed relative to that of the LIDAR device; and
- a 3D image of the three-dimensional plastic product (1) or of the modified three-dimensional product (2).

In a sixth aspect, the invention provides the use of the three-dimensional plastic product (1) according to the first aspect in the form of a filament or pellet, wherein the polymer is a thermoplastic polymer, in the production of a ready-to-use three-dimensional plastic product (1) according to the first aspect, wherein the polymer is a thermoplastic polymer.

In a seventh aspect, the invention provides the use of the three-dimensional plastic product (1) according to the first aspect (1) or of the modified three-dimensional product (2) according to the second aspect,

- in Laser Imaging Detection And Ranging (LIDAR) of said three-dimensional plastic product (1) or of the modified three-dimensional product (2); and/or
- to improve the visibility of said three-dimensional plastic product (1) or of said modified three-dimensional product (2) under visible light conditions; and/or
- to prepare a three-dimensional image of said three-dimensional plastic product (1) or of said modified three-dimensional product (2).

**DEFINITIONS**

The wording *'the spherical glass do not protrude from the polymer matrix'* as used herein means that the spherical glass beads are covered by the polymer matrix. The outer retroreflective surface part(s) (C) of the three-dimensional plastic product (1) as defined herein can have a smooth surface, glossy appearance or semi-glossy appearance wherein the spherical glass beads are fully embedded in the polymer matrix but can also have a rough(er) surface or matte

appearance when the spherical glass beads protrude from the surface but are still covered by the polymer matrix. The terms *'plastic'* and *'polymer matrix'* are used interchangeably.

The term *'pigment'* as used herein refers to particulate colorants, such as spherical parts or flakes. They are insoluble in the binder or solvent used.

The term *'dye'* as used herein refers to colorants that can be molecularly dissolved in the binder or solvent used.

The term *'colorant'* as used herein includes pigments as well as dyes.

The term *'titanium suboxides'* as used herein refers to titanium oxide compound with the formula $Ti_nO_{2n-1}$, wherein $n$ is an integer greater than 1.

The term *'LIDAR'* is an acronym of *'light detection and ranging'* or *'laser imaging, detection, and ranging'* and concerns a method for determining ranges (variable distance) to an object, speed of an object and 3D-representations of an object by targeting the object with electromagnetic radiation, typically laser light, and measuring the time for the reflected electromagnetic radiation to return to a receiver.

The term *'vehicle'* as used herein refers to a physical object used suitable for transporting people or goods. Non-limiting examples of vehicles in the context of this invention are chosen from the group consisting of cars, lorries, trucks, bikes, mopeds, scooters, motorcycles, trains, trams, boats, ships, drones, skateboards, missiles, helicopters and aircrafts. In a preferred embodiment, the vehicle is chosen from cars, lorries, trucks, bikes, mopeds, scooters and motorcycles.

## BRIEF DESCRIPTION OF THE FIGURES

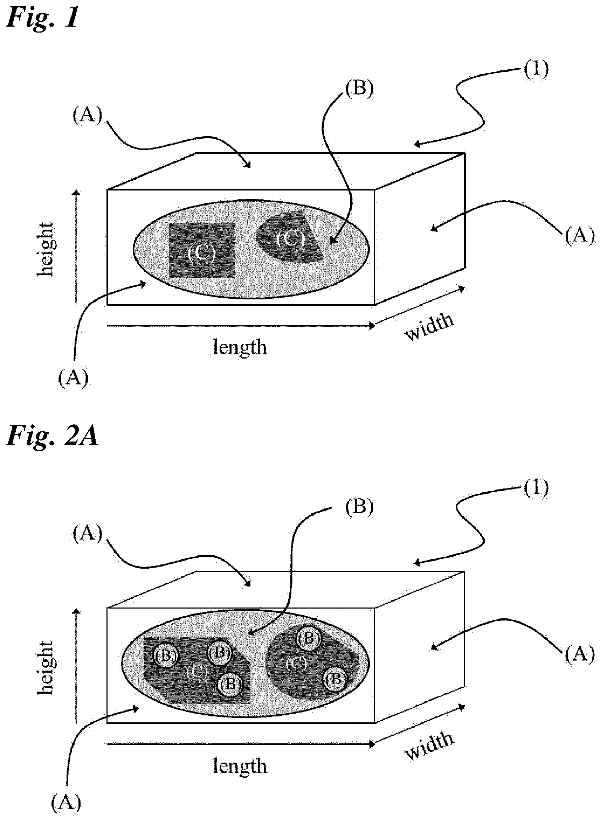

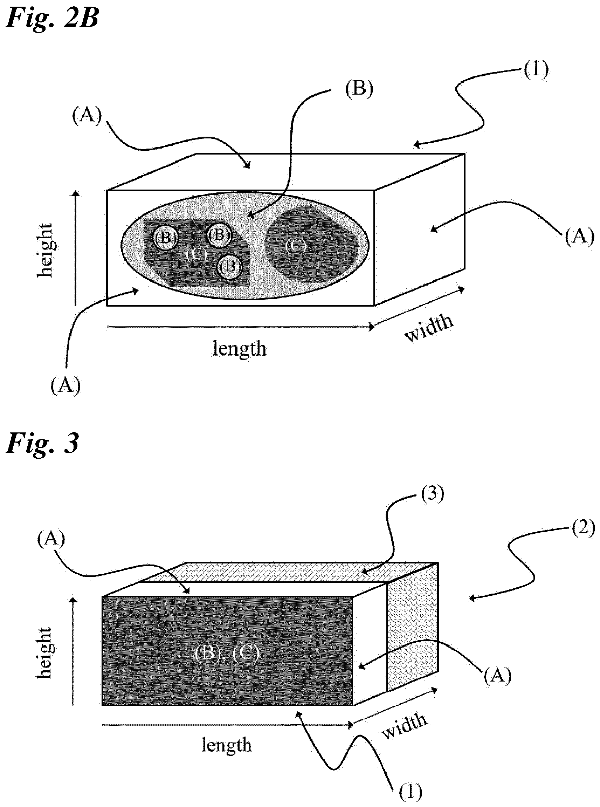

Figures 1, 2a and 2b together depict what is meant by *'an interrupted or uninterrupted outer retroreflective surface part (C)'.*

Figure 1 depicts a three-dimensional plastic product (1) with an outer surface (A), wherein part (B) of the outer surface (A) has retroreflective properties and wherein part (B) comprises two *'uninterrupted'* outer retroreflective surface parts (C).

Figure 2a depicts a three-dimensional plastic product (1) with an outer surface (A), wherein part (B) of the outer surface (A) has retroreflective properties and wherein part (B) comprises two *'interrupted'* outer retroreflective surface parts (C). Both outer retroreflective surface parts (C) are interrupted by parts of outer surface (B).

Figure 2b depicts a three-dimensional plastic product (1) with an outer surface (A), wherein part (B) of the outer surface (A) has retroreflective properties and wherein part (B) comprises two outer retroreflective surface parts (C) of which one outer retroreflective surface part (C) is *'interrupted'* by parts of outer surface (B) and one outer retroreflective surface part (C) is *'uninterrupted'.*

Figure 3 depicts a modified three-dimensional product (2) comprising a three-dimensional plastic product (1) according to the invention and a further component (3) attached thereto. The three-dimensional plastic product (1) has an outer surface (A), of which part (B) has retroreflective properties and wherein part (B) comprises one outer retroreflective surface part (C) - that coincides with part (B) - wherein the spherical glass beads do not protrude from the polymer matrix. The outer retroreflective surface part (C) is not covered by the further component (3) attached to the three-dimensional plastic product (1).

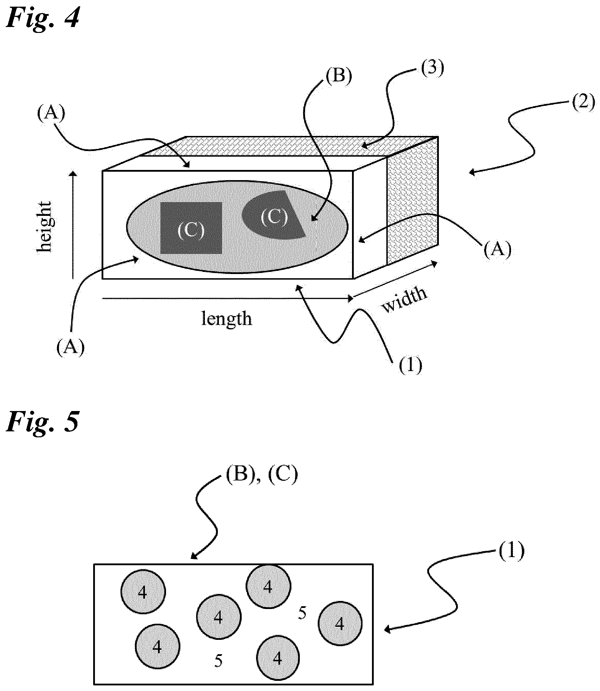

Figure 4 depicts a modified three-dimensional product (2) comprising a three-dimensional plastic product (1) according to the invention and a further component (3) attached thereto. The three-dimensional plastic product (1) has an outer surface (A), of which part (B) has retroreflective properties and wherein part (B) comprises two outer retroreflective surface parts (C) wherein the spherical glass beads do not protrude from the polymer matrix. The two outer retroreflective surface parts (C) are not covered by the further component (3) attached to the three-dimensional plastic product (1).

Figure 5 depicts a cross-section (in a direction perpendicular to outer retroreflective surface part (C)) of a three-dimensional plastic product (1) with a smooth, glossy or semi-glossy outer retroreflective surface part (C) wherein the spherical glass beads (4) are fully embedded in the polymer matrix (5). Outer retroreflective surface part (C) coincides with outer surface part (B).

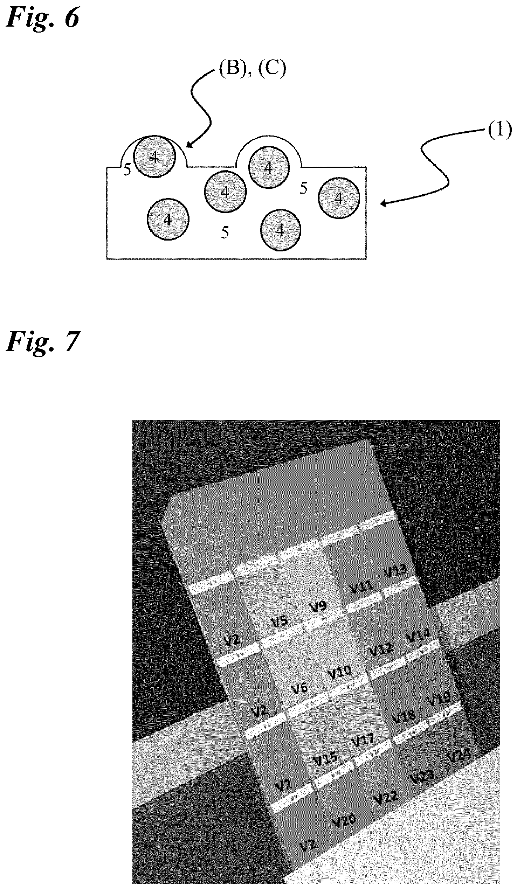

Figure 6 depicts a cross-section of a three-dimensional plastic product (1) with a matte appearance of the outer retroreflective surface part (C) wherein the spherical glass beads (4) protrude from the surface to create a certain roughness but are still covered by the polymer matrix (5). Outer retroreflective surface part (C) coincides with outer surface part (B).

Figure 7 depicts retroreflection of surfaces of three-dimensional plastic products under an angle of 45°.

## DETAILED DESCRIPTION

**Three-dimensional plastic product**

A first aspect of the invention concerns a three-dimensional plastic product (1) with an outer surface (A), wherein at least part (B) of the outer surface (A) has retroreflective properties, wherein said three-dimensional plastic product (1) consists, based on the total weight of the three-dimensional plastic product (1), of:

- 25 - 95.9 wt.% of a polymer chosen from thermoplastic and thermoset polymers;
- 4 - 70 wt.% of spherical glass beads, wherein said spherical glass beads have a median particle diameter D50, as measured with laser diffraction, between 1 and 150 μm, and a refractive index, measured at a wavelength λ of 589 nm, between 2.0 and 2.8, wherein the spherical glass beads are not coated with a light-reflective coating;
- 0.1 - 15 wt.% of pigment flakes chosen from the group consisting of metallic pigment flakes, pearlescent pigment flakes or a combination thereof, said pigment flakes having a median diameter, as measured with laser diffraction, between 1 and 75 μm; and
- 0 - 15 wt.% of one or more further ingredients,

wherein the minimum size of the three-dimensional plastic product (1) in all directions is at least 500 μm, and wherein part (B) of the outer surface (A) with retroreflective properties comprises one or more outer retroreflective surface parts (C) wherein the spherical glass beads do not protrude from the polymer matrix.

As will be appreciated by those skilled in the art, the wording *'the three-dimensional plastic product (1) consists of'* means that the combined amounts of polymer (thermoplastic or thermoset), spherical glass beads, pigment flakes and further ingredients add up to 100 wt.% of the three-dimensional plastic product (1).

The wording *'outer surface with retroreflective properties'* as used herein refers to a surface that, solely based on its composition, is able to reflect light back into the direction from which the impinging light came, irrespective of whether light can actually reach this outer surface.

In a preferred embodiment, the one or more outer retroreflective surface parts (C) of the three-dimensional plastic product (1) as defined herein are smooth or have a glossy or semi-glossy appearance, wherein the spherical glass beads are fully embedded in the polymer matrix. Such a three-dimensional plastic product (1) can be produced in a smooth mould. Such an embodiment is depicted in Figure 5. In another embodiment, the one or more outer retroreflective surface parts (C) of the three-dimensional plastic product (1) as defined herein are rough or have a matte appearance, wherein the spherical glass beads protrude from the surface but are still covered by the polymer matrix. Such a three-dimensional plastic product (1) can be produced in a mould with surface roughness. Such an embodiment is depicted in Figure 6.

In a preferred embodiment, the surface area of the one or more outer retroreflective surface parts (C) of the three-dimensional plastic product (1) as defined herein are uninterrupted, meaning that they do not enclose outer retroreflective surface parts (B). Such a preferred embodiment is depicted in Figure 1. In an embodiment, the surface area of the one or more outer retroreflective surface parts (C) of the three-dimensional plastic product (1) as defined herein are interrupted, meaning that they enclose outer retroreflective surface parts (B) and/or outer surface parts (A). Such an embodiment is depicted in Figure 2a.

As explained hereinbefore, part (B) of outer surface (A) has retroreflective properties. Unlike the one or more outer retroreflective surface parts (C), the remainder of outer retroreflective surface part (B) may have spherical glass beads that protrude from the surface without being covered by the polymer matrix.

Unlike Prizmalite's hemispherically aluminum (HAC) coated barium titanate spherical glass beads having a refractive index of 1.9, the spherical glass beads having a refractive index between 2.0 and 2.8, measured at a wavelength λ of 589 nm, that are not hemispherically coated with a metallic coating do not migrate to the surface of the plastic product during production. Hence, in a preferred embodiment, the spherical glass beads are homogeneously distributed across the three-dimensional plastic product (1). In another preferred embodiment, the spherical glass beads and the pigment flakes are homogeneously distributed across the three-dimensional plastic product (1).

Since the density of typical thermoplastic and thermoset polymers is much lower than the density of spherical glass beads having a refractive index, measured at a wavelength λ of 589 nm, of between 2.0 and 2.8, the volume fraction of the spherical glass beads in the three-dimensional plastic product (1) is typically lower than that of the polymer phase, meaning that the spherical glass beads are typically fully encased in a continuous matrix of the polymer phase.

In a preferred embodiment, the surface area of the at least part (B) of outer surface (A) having retroreflective properties constitutes at least 1 % of the surface area of outer surface (A), more preferably at least 5 %, even more preferably at least 10 %, such as at least 20 %, at least 30 %, at least 40 %, at least 50 %, at least 60 %, at least 70 %, at least 80 %, at least 90 % or at least 99 %.

In a very preferred embodiment, the surface area of the at least part (B) of outer surface (A) having retroreflective properties constitutes 100% of the surface area of outer surface (A).

In another preferred embodiment, the surface area of the at least part (B) of outer surface (A) having retro-

reflective properties constitutes between 1 and 100 % of the surface area of outer surface (A), more preferably between 5 and 100 %, even more preferably between 10 and 100 %, such as between 20 and 100 %, between 30 and 100 %, between 40 and 100 %, between 50 and 100 %, between 60 and 100 %, between 70 and 100 %, between 80 and 100 %, between 90 and 100 % or between 95 and 100 %.

In another embodiment, the surface area of the at least part (B) of outer surface (A) having retroreflective properties constitutes between 1 and 95 % of the surface area of outer surface (A), such as between 5 and 90 %, between 10 and 85 %, between 15 and 80 % or between 20 and 75 %.

In a preferred embodiment, the surface area of the one or more outer retroreflective surface parts (C) constitutes at least 1 % of the surface area of part (B) of outer surface (A), more preferably at least 5 %, even more preferably at least 10 %, such as at least 20 %, at least 30 %, at least 40 %, at least 50 %, at least 60 %, at least 70 %, at least 80 %, at least 90 % or at least 99 %.

In a very preferred embodiment, the surface area of the one or more outer retroreflective surface parts (C) constitutes 100% of the surface area of part (B) of outer surface (A). Such a very preferred embodiment is depicted in Figure 3.

In another preferred embodiment, the surface area of the one or more outer retroreflective surface parts (C) constitutes between 1 and 100 % of the surface area of part (B) of outer surface (A), more preferably between 5 and 100 %, even more preferably between 10 and 100 %, such as between 20 and 100 %, between 30 and 100 %, between 40 and 100 %, between 50 and 100 %, between 60 and 100 %, between 70 and 100 %, between 80 and 100 %, between 90 and 100 % or between 95 and 100 %.

In another embodiment, the surface area of the one or more outer retroreflective surface parts (C) constitutes between 1 and 95 % of the surface area of part (B) of outer surface (A), such as between 5 and 90 %, between 10 and 85 %, between 15 and 80 % or between 20 and 75 %.

As will be appreciated by those skilled in the art, if the surface area of the one or more outer retroreflective surface parts (C) constitutes 100 % of the surface area of part (B) of outer surface (A), then the complete surface area of part (B) of outer surface (A) is constituted by the one or more outer retroreflective surface parts (C), meaning that the outer retroreflective surface part (B) and the one or more outer retroreflective surface parts (C) coincide.

In a preferred embodiment, the surface area of the one or more outer retroreflective surface parts (C) constitutes at least 1 % of the surface area of outer surface (A), more preferably at least 5 %, even more preferably at least 10 %, such as at least 20 %, at least 30 %, at least 40 %, at least 50 %, at least 60 %, at least 70 %, at least 80 %, at least 90 % or at least 99 %.

In a very preferred embodiment, the surface area of the one or more outer retroreflective surface parts (C) constitutes 100 % of the surface area of outer surface (A).

As will be appreciated by those skilled in the art, if the surface area of the one or more outer retroreflective surface parts (C) constitutes 100% of the surface area of outer surface (A), then the complete surface (A) is a single uninterrupted retroreflective outer surface, wherein the spherical glass beads do not protrude from the polymer matrix. In this particular case, outer surface (A) coincides with outer retroreflective surface (B) which in turn coincides with the (one or more) outer retroreflective surface part(s) (C).

In another preferred embodiment, the surface area of the one or more outer retroreflective surface parts (C) constitutes between 1 and 100 % of the surface area of outer surface (A), more preferably between 5 and 100 %, even more preferably between 10 and 100 %, such as between 20 and 100 %, between 30 and 100 %, between 40 and 100 %, between 50 and 100 %, between 60 and 100 %, between 70 and 100 %, between 80 and 100 %, between 90 and 100 % or between 95 and 100 %.

In another embodiment, the surface area of the one or more outer retroreflective surface parts (C) constitutes between 1 and 95 % of the surface area of outer surface (A), such as between 5 and 90 %, between 10 and 85 %, between 15 and 80 % or between 20 and 75 %.

The three-dimensional plastic product (1) consists of the composition as defined hereinbefore. Hence, the fact that the three-dimensional plastic product (1) has an outer surface (A) wherein at least part (B) of the outer surface (A) has retroreflective properties is a direct result of this specific composition and not of a part or component (3), such as a retroreflective coating, that may have been applied on part of the three-dimensional plastic product (1) to provide a *'modified three-dimensional product (2)'*.

No matter how complex the three-dimensional geometry of the plastic product (1) is, the at least part (B) of the outer surface (A) shows retroreflectivity, provided that light can reach the outer retroreflective surface.

The three-dimensional plastic product (1) has a minimum size in all directions of at least 500 μm. The term *'minimum size in all directions'* as used herein means that the length, the width and the height of the three-dimensional plastic product (1) are at least 500 μm. Hence, the three-dimensional plastic product (1) can be distinguished from for example coating layers typically having a thickness of far less then 500 μm.

In a preferred embodiment, the three-dimensional plastic product (1) has a minimum size in all directions of at least 1 mm, at least 2 mm, at least 3 mm, at least 4 mm, at least 5 mm, at least 6 mm, at least 8 mm or at least 10 mm.

In another preferred embodiment, the three-dimensional plastic product (1) has a size in all directions of between 500 μm and 10 m, between 2 mm and 10 m, between 3 mm and 10 m, between 4 mm and 10 m, between 5 mm and 10 m, between 6 mm and 10 m, between 8 mm and 10 m or between 10 mm and 10 m.

In yet another preferred embodiment, the three-dimensional plastic product (1) has a size in all directions of between 500 μm and 9 m, between 500 μm and 7 m, between 500 μm and 5 m, between 500 μm and 3 m, between 500 μm and 2 m, between 500 μm and 1 m, between 500 μm and 80 cm or between 500 μm and 60 cm.

In yet another preferred embodiment, the three-dimensional plastic product (1) has a size in all directions of between 1 mm and 5 m, between 2 mm and 3 m, between 3 mm and 2 m, between 5 mm and 1.8 m, between 1 cm and 1.5 m or between 2 cm and 1 m.

In an embodiment, the three-dimensional plastic product (1), wherein the polymer is a thermoplastic polymer, has the form of a filament or pellet. Filaments or pellets can be used in the production of a ready-to-use three-dimensional plastic product (1) in accordance with the first aspect, for example using extrusion and injection moulding.

In another embodiment, wherein the polymer is a thermoplastic or thermoset polymer, the three-dimensional plastic product (1) is a ready-to-use product, preferably a vehicle part, more preferably an automotive body part, such as an automotive body part chosen from the group consisting of bumpers, mirror housings, handles and radio antennae.

***Polymer***

The three-dimensional plastic product (1) comprises 25 - 95.9 wt.%, based on the weight of the plastic product (1), of a polymer chosen from thermoplastic and thermoset polymers. The terms *'thermoplastic polymer'* and *'thermoset polymer'* as used herein have the common meaning in the art.

In an embodiment, the three-dimensional plastic product (1) comprises 25 - 94 wt.%, based on the weight of the plastic product (1), of the polymer, such as 25 - 92 wt.%, 25 - 90 wt.%, 25 - 85 wt.%, 25 - 80 wt.%, 25 - 75 wt.%, 25 - 70 wt.%, 25 - 65 wt.%, 25 - 60 wt.%, 25 - 55 wt.% or 25 - 50 wt.%.

In another embodiment, the three-dimensional plastic product (1) comprises 27 - 95.9 wt.%, based on the weight of the plastic product (1), of the polymer, such as 30 - 95.9 wt.%, 35 - 95.9 wt.%, 40 - 95.9 wt.%, 45 - 95.9 wt.%, 50 - 95.9 wt.% or 55 - 95.9 wt.%.

In an embodiment the polymer is a thermoset polymer, preferably a thermoset polymer chosen from the group consisting of phenol formaldehyde (PF), urea formaldehyde (UF), melamine formaldehyde (MF), epoxies (EP), polyurethanes (PU) and unsaturated polyester (UP).

In a preferred embodiment, the polymer is a thermoplastic polymer, more preferably a thermoplastic polymer chosen from the group consisting of homopolymers and copolymers of polyethylene (PE, LDPE, HDPE, LLDPE), polypropylene (PP), polyvinylchloride (PVC), polystyrene (PS), polymethylmethacrylate (PMMA), polyamide (PA), polyoxymethylene (POM), polycarbonate (PC), polyethylene terephthalate (PET), polyethylene terephthalate glycol (PETG), polysulfone (PSU), polyimide (PI), polybutene (PB), polyether ether ketone (PEEK), poly(acrylonitrile butadiene styrene) (ABS), poly(acrylonitrile butadiene acrylate) (ABA), poly(acrylic styrene acrylonitrile) (ASA), poly(lactic acid) (PLA), nylon and blends thereof.

In an even more preferred embodiment, the polymer is a thermoplastic polymer chosen from the group consisting of polyethylene (PE, LDPE, HDPE, LLDPE), polypropylene (PP), polystyrene (PS) and polyethylene terephthalate glycol (PETG).

***Spherical glass beads***

As defined hereinbefore, the three-dimensional plastic product (1) comprises spherical glass beads, wherein said spherical glass beads have a median particle diameter D50, as measured with laser diffraction, between 1 and 150 μm, and a refractive index, measured at a wavelength λ of 589 nm, between 2.0 and 2.8, wherein the spherical glass beads are not hemispherically coated with a light-reflective coating.

In preferred embodiments, the term *'glass'* in *'spherical glass beads'* as used herein refers to non-crystalline, amorphous solid and transparent material made of oxides. In other embodiments, the term *'glass'* in *'spherical glass beads'* refers to solid and transparent material made of oxides and containing some microcrystallinity. The refractive index of the spherical glass beads is closely related to the density of the glass, although the relationship is not linear. Because of the nature of glass, the density is approximately an additive function of its composition. Densities of spherical glass beads having refractive indices between 1.5 and 2.8 typically vary between 2.5 and 4.5 g/cm$^3$.

In a preferred embodiment, the spherical glass beads have a refractive index, measured at a wavelength λ of 589 nm, of between 2.0 and 2.6, preferably between 2.1 and 2.4.

In another embodiment, the spherical glass beads as defined herein comprise at least two types of spherical glass beads.

Oxides that can be used in glass are oxides of silicon, boron, aluminium, sodium, barium, vanadium, titanium,

lanthanum, strontium, zirconium, potassium, magnesium, iron, calcium, zinc, lithium, barium and lead. The spherical glass beads can for example comprise different combinations of silica ($SiO_2$), boric oxide ($B_2O_3$), phosphorous pentoxide ($P_2O_5$), vanadium pentoxide ($V_2O_5$), arsenic trioxide ($As_2O_3$), germanium oxide ($GeO_2$), calcium oxide (CaO), sodium oxide ($Na_2O$), magnesium oxide (MgO), zinc oxide (ZnO), aluminium oxide ($Al_2O_3$), potassium oxide ($K_2O$), iron oxide ($Fe_2O_3$), lead oxide (PbO), barium oxide (BaO), barium titanate ($BaTiO_3$), titanium oxide ($TiO_2$), lithium oxide ($Li_2O$), strontium oxide (SrO), lanthanum oxide ($La_2O_3$), and zirconium oxide ($ZrO_2$). Silica and boric oxide are generally the lowest in density. Glasses containing large weight percentages of these oxide therefore generally result in glass beads with low refractive indices. The refractive indices can be increased by adding oxides with higher molecular weights. Preferably, the spherical glass beads do not comprise PbO.

Glass beads having refractive indices in the range of 1.5 - 2.51 and their composition in terms of oxides are disclosed in WO2014/109564A1, PbO-free transparent glass beads with refractive indices of above 2.15 are disclosed in US4,082,427.

The spherical glass beads may be coloured spherical glass beads as long as they remain transparent. Both coloured spherical glass beads made from coloured transparent glass and spherical glass beads provided with a concentric transparent coloured coating are encompassed by the invention. The colour may be the natural colour caused by the composition of the oxides or may be deliberately chosen by adding ingredients having a specific colour. Coloured glass beads having high refractive indices and high transparency are disclosed in WO2014/109564A1.

The spherical glass beads have a median particle diameter D50, as measured with laser diffraction. Accordingly, the median particle diameter D50 is a volume median, based on a volume distribution. The median particle diameter D50 is the diameter where half of the population of spherical glass beads lies below. This volume median particle diameter is often referred to in the art as Dv50 or $D_{v0.5}$.

In a preferred embodiment, the spherical glass beads have a median particle diameter D50, as measured with laser diffraction, between 1.5 and 120 μm, more preferably between 2 and 100 μm, even more preferably between 3 and 80 μm, still more preferably between 4 and 50 μm, such as between 5 and 40 μm or between 6 and 30 μm.

In another embodiment, the spherical glass beads have a median particle diameter D50, as measured with laser diffraction, between 10 and 150 μm, such as between 15 and 150 μm, between 20 and 150 μm, between 25 and 150 μm, between 30 and 150 μm or between 35 and 150 μm.

In a very preferred embodiment, the spherical glass beads have a median particle diameter D50, as measured with laser diffraction, between 1 and 100 μm, such as between 1 and 75 μm, between 1 and 50 μm, between 1 and 45 μm, between1 and 40 μm, between 1 and 35 μm, between 1 and 30 μm, between 1 and 25 μm, between 1 and 20 μm or between 1 and 15 μm.

The diameters D10 and D90 are often referred to in the art as Dv10 or $D_{v0.1}$ and Dv90 or $D_{v0.9}$, respectively. The D10 diameter is the diameter where 10% of the population of spherical glass beads lies below. Similarly, the D90 diameter is the diameter where 90% of the population of spherical glass beads lies below.

The span, as measured by laser diffraction, of the particle size distribution of the spherical glass beads is defined by:

$$span = \frac{D90 - D10}{D50}$$

In another embodiment, the spherical glass beads have a median particle diameter D50, as measured with laser diffraction, between 1 and 100 μm and a span between 0 and 1.9, preferably between 0 and 1.5, more preferably between 0 and 1, even more preferably between 0 and 0.5, such as between 0 and 0.2 or between 0 and 0.1.

In a preferred embodiment, the spherical glass beads have a median particle diameter D50, as measured with laser diffraction, between 1 and 50 μm and a span between 0 and 1.9, preferably between 0 and 1.5, more preferably between 0 and 1, even more preferably between 0 and 0.5, such as between 0 and 0.2 or between 0 and 0.1.

In another preferred embodiment, the spherical glass beads have a median particle diameter D50, as measured with laser diffraction, between 1 and 30 μm and a span between 0 and 1.9, preferably between 0 and 1.5, more preferably between 0 and 1, even more preferably between 0 and 0.5, such as between 0 and 0.2 or between 0 and 0.1.

In yet another preferred embodiment, the spherical glass beads have a median particle diameter D50, as measured with laser diffraction, between 1 and 20 μm and a span between 0 and 1.9, preferably between 0 and 1.5, more preferably between 0 and 1, even more preferably between 0 and 0.5, such as between 0 and 0.2 or between 0 and 0.1.

In still another preferred embodiment, the spherical glass beads have a median particle diameter D50, as measured with laser diffraction, between 1 and 15 μm and a span between 0 and 1.9, preferably between 0 and 1.5, more preferably between 0 and 1, even more preferably between 0 and 0.5, such as between 0 and 0.2 or between 0 and 0.1.

As will be appreciated by those skilled in the art, *span* = 0 corresponds to monodisperse spherical glass beads.

The spherical glass beads are not hemispherically coated with a light-reflective coating. Examples of a

hemispherical light-reflective coating are hemispherical metal coatings, such as a hemispherical aluminium coating (HAC). The inventors have found that a hemispherical light-reflective coating has an adverse effect on retroreflectivity/LIDAR-detectability of the one or more outer surface parts (C) if the spherical glass beads do not protrude from the plastic or polymer matrix.

In a preferred embodiment, the spherical glass beads are not coated with a material which is repellent to the polymer. Spherical glass beads coated with a material repellent to the polymer result in flotation of the spherical glass beads, *i.e.* migration of the spherical glass beads to the outer surface. Hence, the wording *'coated with a material repellent to the polymer'* as used herein is considered interchangeable with *'coated with a material that result in flotation of the spherical glass beads'* or *'coated with a material that result in migration of the spherical glass beads to the outer surface'.* Such coatings are known in the art. As will be appreciated by those skilled in the art, whether the coating is repellent to the polymer depends on the type of polymer. It is within the skills of the artisan to exclude, based on flotation, certain coatings for a given polymer.

Examples of materials repellent to the polymer that are preferably excluded as coating on the spherical glass beads are:

- non-functional silanes, particularly ($C_6$-$C_{10}$)alkyl or aryl di- or tri-alkoxysilanes, such as hexyltrimethoxysilane, isooctyltrimethoxysilane and phenyltrimethoxysilane;
- non-functional silicones, particularly a mixture of a methylhydrogensilicone for flotation and a silanol-containing compound to attach the silicone to the spherical glass beads, such as a mixture of a methylhydrogensilicone and sodium or potassium methyl siliconate or a mixture of a methylhydrogensilicone and a low molecular weight silanol-containing polymer;
- non-functional fluorochemical materials, such as a non-functional fluorochemical polymers.

In this context, the wording *'non-functional'* means *'not containing functional reactive groups .*

In an embodiment, the spherical glass beads are coated with a material that improves adhesion with the polymer. Such coatings are known in the art. As will be appreciated by those skilled in the art, whether the coating improves adhesion with the polymer depends on the type of polymer. It is within the skills of the artisan to choose, based on thermo-mechanical characterization, preferred coatings for a given polymer. In this regard, reference is made to Gelest's brochure 'Silane Coupling Agents - Connecting Across Boundaries', 3rd edition., B. Arkles et al., 2014, Gelest, Inc., Morrisville, PA, Further reference is made to Swarco's brochure 'The game-changing industry system SWARCOFORCE', SWARCO Advanced Industry Systems, Austria, May 2020, incorporated herein by reference in its entirety, disclosing adhesion-promoting silane coatings for many different thermoplastic and thermoset polymers.

Typical examples of materials that generally improve adhesion with polymers are:

- functional silanes, such as silanes having mercapto-, glycidoxy- or amino- functional groups;
- zirconates, titananates, zircoaluminates, alkyl phosphate esters;
- functional zirconate molecules, such as zirconate molecules having mercapto-, glycidoxy- or amino-functional groups;
- functional organosilanes, such as 3-aminopropyltriethoxysilane, 3-methacryloxypropyltrimethoxysilane, gamma-glycidoxypropyltrimethoxysilane, gamma-aminopropyltriethoxysilane and gamma-aminopropyltrimethoxysilane;
- functional titanate molecules, such as titanate molecules having mercapto-, glycidoxy- or amino-functional groups.

In an embodiment, the spherical glass beads are not coated.

In a preferred embodiment, the amount of the spherical glass beads is 5 - 69 wt.%, more preferably 6 - 68 wt.%, even more preferably 7 - 65 wt.%, such as 8 - 60 wt.%, 9 - 55 wt.% or 10 - 50 wt.%, based on the weight of the three-dimensional plastic product (1).

In an embodiment, the amount of the spherical glass beads is 8 - 68 wt.%, more preferably 12 - 65 wt.%, even more preferably 18 - 60 wt.%, such as 20 - 55 wt.% or 30 - 50 wt.%, based on the weight of the three-dimensional plastic product (1).

In embodiments, the amount of the spherical glass beads is 4 - 68 wt.%, 4 - 66 wt.%, 4 - 64 wt.%, 4 - 62 wt.%, 4 - 60 wt.%, 4 - 58 wt.%, 4 - 56 wt.%, 4 - 54 wt.%, 4 - 52 or 4 - 50 wt.%, based on the weight of the three-dimensional plastic product (1).

In another embodiment, the amount of the spherical glass beads is 5 - 70 wt.%, 6 - 70 wt.%, 8 - 70 wt.%, 10 - 70 wt.%, 12 - 70 wt.% or 14 - 70 wt.%, based on the weight of the three-dimensional plastic product (1).

***Pigment flakes***

The three-dimensional plastic product comprises between 0.1 and 15 wt.% of pigment flakes chosen from the

group consisting of metallic pigment flakes, pearlescent pigment flakes or a combination thereof, based on the weight of the three-dimensional plastic product, said pigment flakes having a median diameter, as measured with laser diffraction, between 1 and 75 μm.

Metallic pigment flakes and pearlescent pigment flakes constitute the two main types of (flake-like) special effect pigments. Metallic pigment flakes, also called metal effect pigment flakes, consist of flake-shaped metallic particles, used to give products metallic effect, colour or functional properties like anti-corrosion, heat resistance and conductivity. The small metal platelets behave like mirrors and can reflect incident light. Pearlescent pigment flakes simulate the luster of natural pearls and give the materials additional colour effects, such as angular colour dependence. Pearlescent pigments typically have several layers of materials with different refractive indices. Thin flakes of materials with low refractive indices, such as mica, silica, alumina or glass, are typically used as substrates and they are coated with high refractive materials. Substrate-free pearlescent pigment flakes are however also encompassed by the invention.

In a preferred embodiment, the pearlescent pigment flakes have several layers of materials with different refractive indexes, wherein low refractive index material, such as mica, silica, alumina or glass, is used as substrate and wherein the substrate is coated with a material of a higher refractive index.

*Aspect ratio and thickness of the pigment flakes*

The terms *'flake'* or *'platelet'* as used herein refers to the shape of pigments having a large surface area and a small thickness. Typically, flakes or platelets are characterized by their *'aspect ratio',* being defined as the largest dimension, *i.e.* the largest diameter of the surface, divided by the smallest dimension, *i.e.* the thickness.

In a preferred embodiment, the pigment flakes as used herein have a thickness smaller than 1 μm and an aspect ratio (flake diameter/thickness) of at least 10.

In a preferred embodiment, the thickness of the pigment flakes is between 10 nm and 950 nm, more preferably between 15 nm and 850 nm, even more preferably between 50 nm and 650 nm.

In another preferred embodiment, the thickness of the pigment flakes is between 10 nm and 200 nm, such as between 10 nm and 150 nm, between 10 nm and 100 nm or between 10 and 50 nm.

In another preferred embodiment, the thickness of the pigment flakes is between 200 nm and 980 nm, such as between 300 nm and 980 nm, between 400 nm and 980 nm or between 500 nm and 980 nm.

The pigment flakes as used herein preferably have an aspect ratio of at least 12, preferably at least 15, more preferably at least 20, even more preferably at least 30.

In an embodiment, the pigment flakes as used herein have an aspect ratio of between 10 and 500, preferably between 15 and 250, more preferably between 20 and 100.

*Median diameter of the pigment flakes*

In a preferred embodiment, the median diameter of the pigment flakes is 1.5 - 65 μm, more preferably 2 - 50 μm, even more preferably 3 - 40 μm, such as 4 -35 μm, or 5 - 30 μm.

In another preferred embodiment, the median diameter of the pigment flakes is 1 - 65 μm, such as 1 - 50 μm, 1 - 40 μm, 1 - 35 μm, 1 - 25 μm, 1-20 μm, 1 - 15 μm or 1 - 13 μm.

In yet another preferred embodiment, the median diameter of the pigment flakes is 2 - 75 μm, such as 5 - 75 μm, 10 - 75 μm, 15 - 75 μm, 20 - 75 μm, 25 - 75 μm, 30 - 75 μm or 35 - 75 μm.

*Types of pigment flakes*

In a preferred embodiment, the pigment flakes as defined herein are chosen from (I), (II), (III) or a combination thereof:

(I) Metal flakes or mica flakes, optionally coated with at least one layer of one or more components chosen from the group consisting of metal oxides, metals, metal sulphides, titanium suboxides, titanium oxynitrides, FeO(OH), $SiO_2$, $B_2O_3$, $GeO_2$, $MgF_2$, metal alloys, rare earth compounds, and optionally coated with an outer layer comprising one or more colorants and a binder;

(II) Flakes comprising $Al_2O_3$, $SiO_2$, glass, ceramics, graphite or mica platelets coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder; and

(III) Flakes comprising $Al_2O_3$ platelets doped with one or more components chosen from the group consisting of $TiO_2$, $ZrO_2$, $SiO_2$, $SnO_2$, $In_2O_3$, ZnO and iron oxide, coated with at least one layer of one or more components chosen from the group consisting of metal oxides, metals, metal sulphides, titanium suboxides, titanium oxynitrides, FeO(OH),

$SiO_2$, $B_2O_3$, $GeO_2$, metal alloys, rare earth compounds, and optionally coated with an outer layer comprising one or more colorants and a binder.

In a preferred embodiment, the pigment flakes are synthetic pigment flakes. As will be appreciated by those skilled the art, the term *'synthetic'* in *'synthetic pigment flakes'* means that the pigment flakes are not pigment flakes naturally occurring, but they are pigment flakes that have been chemically manufactured or naturally occurring pigment flakes that have been chemically/physically processed to alter their properties. One of the advantages of using synthetic pigment flakes is that they can be produced with very smooth surfaces and high aspect ratios, thereby increasing their reflective properties.

Pigment flakes (I) can have zero to multiple coating layers, such as 1, 2, 3, 4 or 5 coating layers. In an embodiment, the metal in the metal pigment flakes (I) is chosen from the group consisting of aluminium, silver and gold, preferably aluminium. In an embodiment, metal pigment flakes (I) are aluminium flakes without any coating. In an embodiment, pigment flakes (I) are mica flakes without any coating. In an embodiment, pigment flakes (I) are mica flakes with several coating layers, such as mica flakes coated with $TiO_2$, $Fe_2O_3$ and $SnO_2$.

In an embodiment, metal pigment flakes (I) are aluminium pigment flakes coated with at least one layer of one or more components chosen from the group consisting of metal oxides, $SiO_2$, $B_2O_3$, and $GeO_2$. In an embodiment, metal pigment flakes (I) are aluminium flakes coated with an $SiO_2$ layer.

In an embodiment, flakes (I) are coated with a $SiO_2$ layer and with an outer layer comprising one or more colorants and a binder for fixation of the one or more colorants.

Examples of metal oxides that can be applied in a coating layer on metal pigment flakes (I) are chosen from the group consisting of $TiO_2$, $ZrO_2$, $SnO_2$, ZnO, $MnO_2$, MgO, $Ce_2O_3$, $Fe_2O_3$, $Fe_3O_4$, $FeTiO_5$, $Cr_2O_3$, CoO, $CO_3O_4$, $VO_2$, $V_2O_3$, NiO and combinations thereof.

Examples of suitable aluminium pigment flakes (I) coated with (i) a first layer consisting of $SiO_2$, $B_2O_3$, $MnO_2$, MgO, $GeO_2$ or $Al_2O_3$, (ii) a second $Fe_2O_3$ layer on top of the first layer and optionally (iii) a third layer of $TiO_2$, $ZrO_2$, or $Al_2O_3$ on top of the second layer are disclosed in US2019/044679A1, which is incorporated herein by reference in its entirety.

Pigment flakes (II) and (III) can have one to multiple coating layers, such as 2, 3, 4 or 5 coating layers.

Examples of metal oxides that can be applied in a coating layer on metal pigment flakes (I) are chosen from the group consisting of $TiO_2$, $ZrO_2$, $SnO_2$, ZnO, $MnO_2$, MgO, $Ce_2O_3$, $Fe_2O_3$, $Fe_3O_4$, $FeTiO_5$, $Cr_2O_3$, CoO, $CO_3O_4$, $VO_2$, $V_2O_3$, NiO and combinations thereof.

**In** an embodiment, pigment flakes (II) comprise glass platelets, wherein the glass is borosilicate glass. In an very preferred embodiment, pigment flakes (II) comprise $Al_2O_3$ platelets.

In an embodiment, pigment flakes (II) or (III) are coated with one or more layers of metal oxide, such as with at least one layer of metal oxide chosen from the group consisting of $TiO_2$, $ZrO_2$, $SnO_2$, ZnO, $MnO_2$, MgO, $Ce_2O_3$, $Fe_2O_3$, $Fe_3O_4$, $FeTiO_5$, $Cr_2O_3$, CoO, $CO_3O_4$, $VO_2$, $V_2O_3$, NiO and combinations thereof. In preferred embodiments, pigment flakes (II) or (III) are coated with one or more layers of metal oxide chosen from the group consisting of $TiO_2$, $Fe_2O_3$, $Fe_3O_4$, $SnO_2$, $ZrO_2$, $Cr_2O_3$ and combinations thereof, such as coated with one layer of metal oxide chosen from the group consisting of $TiO_2$, $Fe_2O_3$ and a combination thereof.

Examples of pigment flakes (II) comprising $Al_2O_3$ platelets coated with different layers of metal oxide, $SiO_2$ and an organic dye as a top coat are disclosed in EP2799398B1,

Examples of pigment flakes (II) comprising $Al_2O_3$ platelets coated with metal oxide chosen from the group consisting of $TiO_2$, $Fe_2O_3$ and a combination thereof, and their preparation are disclosed in US6267810B1,

In another embodiment, pigment flakes (II) or (III) are coated with a layer of titanium suboxides ($Ti_nO_{2n-1}$, with $n$ being an integer greater than 1, such as the oxides $Ti_3O_5$, $Ti_2O_3$), with a layer of titanium oxynitrides, with a layer of FeO(OH), or with a thin semitransparent metal layer, for example comprising Al, Fe, Cr, Ag, Au, Pt or Pd, or combinations thereof.

In yet another embodiment, pigment flakes (II) or (III) are coated with a layer of a metal sulfide, such as coated with sulfides of tungsten, molybdenum, cerium, lanthanum or rare earth elements.

In another embodiment, pigment flakes (II) or (III) are coated with an outer layer of one or more colorants, for example Prussian Blue or Carmine Red, and a binder for fixation of the colorant.

As will be appreciated by those skilled in the art, these different layers can be combined, provided that the layer of one or more colorants and a binder is, if present, always an outer layer.

Examples of pigment flakes (III) comprising platelets of $Al_2O_3$ doped with titanium oxide and coated with metal oxide and their manufacture are disclosed in EP0763573B1,

Examples of pigment flakes (III) comprising platelets of $Al_2O_3$ doped $TiO_2$, $ZrO_2$, $SiO_2$, $SnO_2$, $In_2O_3$ or ZnO and coated with metal oxide are disclosed in EP2799398B1,

*Ratio diameter pigment flakes to diameter spherical glass beads*

The inventors have found that retroflection and LIDAR-detectability improves at higher ratios of the median diameter of the pigment flakes to the median particle diameter D50 of the spherical glass beads.

In a preferred embodiment, the median diameter of the pigment flakes is greater than 35% of the median particle diameter D50 of the spherical glass beads, more preferably greater than 38%, such as greater than 40%, greater than 45%, greater than 50%, greater than 55%, greater than 60%, greater than 70%, greater than 90%, greater than 110% or greater than 130%.

In another preferred embodiment, the median diameter of the pigment flakes is between 35 and 400% of the median particle diameter D50 of the spherical glass beads, more preferably between 40 and 400%, such as between 45 and 400%, between 50 and 400%, between 55 and 400%, between 60 and 400%, between 70 and 400%, between 90 and 400%, between 110 and 400% or between 130 and 400%.

In yet another embodiment, the median diameter of the pigment flakes is between 35 and 350% of the median particle diameter D50 of the spherical glass beads, more preferably between 35 and 300%, such as between 35 and 250%, between 35 and 225%, between 35 and 200%, between 35 and 175%, between 35 and 150%, between 35 and 125%, between 35 and 100% or between 35 and 75%.

*Amount of pigment flakes*

In a preferred embodiment, the amount of said pigment flakes is 0.15 - 13 wt.%, based on the weight of the three-dimensional plastic product (1), such as 0.3 - 10 wt.%, 0.5 - 7.5 wt.%, 0.8 - 7 wt.%, 0.9 - 6.5 wt.% or 1 - 6 wt.%.

In an embodiment, the amount of said pigment flakes is 0.1 - 14 wt.%, based on the weight of the three-dimensional plastic product (1), such as 0.1 - 12 wt.%, 0.1 - 10 wt.%, 0.1 - 8 wt.%, 0.1 - 5 wt.% or 0.1 - 4 wt.%.

In another embodiment, the amount of said pigment flakes is 0.2 - 15 wt.%, based on the weight of the three-dimensional plastic product (1), such as 0.5 - 15 wt.%, 1 - 15 wt.%, 2 - 15 wt.%, 3 - 15 wt.% or 4 - 15 wt.%.

The amount of said pigment flakes is preferably 1 part by weight to between 1 and 80 part by weight of the spherical glass beads, preferably 1 part by weight to between 1 and 40 part by weight of the spherical glass beads, more preferably 1 part by weight to between 1 and 30 part by weight of the spherical glass beads.

***Further ingredients***

As defined hereinbefore, the three-dimensional plastic product (1) comprises 0 - 15 wt.% of one or more further ingredients, based on the weight of the three-dimensional plastic product (1). As will be appreciated by the skilled person, the *'further'* ingredients are different from the other ingredients defined in the three-dimensional plastic product (1). In other words, the one or more further ingredients do not comprise said polymer (thermoplastic or thermoset), said spherical glass beads and said pigment flakes.

In a preferred embodiment, the one or more further ingredients do not comprise one or more of:

- spherical glass beads that are hemispherically coated with a light-reflective coating;
- spherical glass beads with a refractive index, measured at a wavelength of 589 nm, of 1.93 or lower; and
- spherical glass beads that are coated with a material which is repellent to the polymer.

The one or more further ingredients can encompass any additive that is typically used in plastic products. In an embodiment, the further ingredients are chosen from the group consisting of rheology modifiers, foam control agents, luminescent agents, UV-absorbers, plasticizers, reinforcement fibers, preservatives, dyes, curing initiators, organic pigments, inorganic pigments other than the metallic pigment flakes and pearlescent pigment flakes, and combinations thereof. Examples of reinforcement fibres are glass, carbon, aramid and basalt fibres.

In an embodiment, the amount of the one or more further ingredients is 0.01 - 15 wt.%, 0.02 - 13 wt.%, 0.05 - 11 wt.%, 0.1 - 10 wt.%, 0.2 - 9 wt.%, 0.25 - 8 wt.%, 0.30 - 7 wt.% or 0.35 - 6 wt.%, based on the weight of the three-dimensional plastic product (1).

In another embodiment, the amount of the one or more further ingredients is 0 - 14 wt.%, 0 - 13 wt.%, 0 - 12 wt.%, 0 - 11 wt.%, 0 - 10 wt.%, 0 - 9 wt.%, 0 - 8 wt.% or 0 - 7 wt.%, based on the weight of the three-dimensional plastic product (1).

In yet another embodiment, the amount of the one or more further ingredients is 0.02 - 15 wt.%, 0.05 - 15 wt.%, 0.1 - 15 wt.%, 0.2 - 15 wt.%, 0.25 - 15 wt.%, 0.30 - 15 wt.% or 0.35 - 15 wt.%, based on the weight of the three-dimensional plastic product (1).

## Modified three-dimensional product (2)

The three-dimensional plastic product (1) according to the first aspect consists of the composition as defined hereinbefore. It can be used as an intermediate in the production of a modified three-dimensional product (2) wherein one or more further parts or components (3) are attached thereto.
In a second aspect, the invention concerns a modified three-dimensional product (2) comprising:

- one or more three-dimensional plastic products (1) according to the first aspect and one or more further parts or components (3) attached thereto; or
- one or more further parts or components (3) and one or more three-dimensional plastic products (1) according to the first aspect attached thereto,

with the proviso that at least part of the one or more outer retroreflective surface parts (C) of the three-dimensional plastic products (1) according to the first aspect is not covered by the one or more further parts or components (3).
Accordingly, one or more of the three-dimensional plastic products (1) according to the first aspect can be part of a modified three-dimensional product (2), thereby providing retroreflectivity and/or LIDAR-detectability to that modified product. As an example, the three-dimensional plastic product (1) according to the first aspect is a bumper that is part of a vehicle, the vehicle being the modified three-dimensional product (2).
The one or more further parts or components (3) are not necessarily made of plastic. For example, in case the modified three-dimensional product (2) is a car and the three-dimensional plastic products (1) are two mirror housings, the one or more further parts or components (3) attached to the two mirror housings are the remaining car parts, such as rubber tyres, a metal coachwork and chassis, et cetera.
In a preferred embodiment, the modified three-dimensional product (2) comprises the three-dimensional plastic product (1) according to the first aspect of which part is coated with one or more coating layers, the one or more coating layers being one or more further parts or components (3).
In a preferred embodiment, the modified three-dimensional product (2) is a vehicle part, more preferably an automotive body part, such as an automotive body part chosen from the group consisting of bumpers, mirror housings, handles, radio antennae and skirting.
In a very preferred embodiment, the modified three-dimensional product (2) is a vehicle, more preferably a vehicle chosen from the group consisting of cars, lorries, trucks, bikes, mopeds, scooters, motorcycles, trains, trams, boats, ships, drones, skateboards, missiles, helicopters and aircrafts, even more preferably a vehicle chosen from cars, lorries, trucks, bikes, mopeds, scooters and motorcycles.

## Process for producing the three-dimensional plastic product (1)

A third aspect of the invention concerns a process for producing the three-dimensional plastic product (1) with retroreflective properties according to the first aspect, wherein the polymer is a thermoplastic polymer, said process comprising the steps of:

(a) providing the thermoplastic polymer, the spherical glass beads, the pigments flakes and the optional further ingredients;
(b) compounding the ingredients provided in step (a) at a temperature above the melting point of the thermoplastic polymer;
(c) providing the mixture obtained in step (b) into a mould or extruding the mixture obtained in step (b); and
(d) cooling the mixture in the mould to a temperature below the melting point of the thermoplastic polymer and removing the three-dimensional plastic product (1) with retroreflective properties from the mould or cooling the extrudate to a temperature below the melting point of the thermoplastic polymer to provide the three-dimensional plastic product (1) with retroreflective properties.

In an embodiment, the process according to the third aspect is performed in an extruder and an injection moulding machine. It is within the skills of the artisan, to choose appropriate process conditions.
As will be appreciated by those skilled in the art, step (b) of compounding the ingredients can be performed in more than one step. One can for example first prepare a masterbatch of polymer and spherical glass beads, e.g. in filament or pellet form, and then compound this masterbatch with pigment flakes, the optional one or more further ingredients and optional additional polymer.
A fourth aspect of the invention concerns a process for producing the three-dimensional plastic product (1) with retroreflective properties according to the first aspect, wherein the polymer is a thermoset polymer, said process comprising the steps of:

(a) providing a thermoset curable resin, the spherical glass beads, the pigments flakes and the optional further ingredients;
(b) mixing the ingredients provided in step (a);
(c) providing the mixture obtained in step (b) into a mould;
(d) curing the mixture in the mould to provide the three-dimensional plastic product (1) with retroreflective properties; and
(e) removing the three-dimensional plastic product (1) with retroreflective properties from the mould.

In an embodiment, the process according to the fourth aspect is performed in an injection moulding machine. It is within the skills of the artisan, to choose appropriate process conditions.

As described hereinbefore, the one or more outer retroreflective surface parts (C) of the three-dimensional plastic product (1) can be smooth or have a glossy or semi-glossy appearance, wherein the spherical glass beads are fully embedded in the polymer matrix. Such a three-dimensional plastic product (1) can be produced using a mould with smooth internal surfaces in the processes according to the third or fourth aspect. The one or more outer retroreflective surface parts (C) of the three-dimensional plastic product (1) can also be rough or have a matte appearance, wherein the spherical glass beads protrude from the surface but are still covered by the polymer matrix. Such a three-dimensional plastic product (1) can be produced using a mould with rough internal surfaces in the processes according to the third or fourth aspect.

## Process for producing the modified three-dimensional product (2)

As will be appreciated by those skilled in the art, the modified three-dimensional product (2) as defined hereinbefore can be produced by providing one or more three-dimensional plastic products (1) according to the first aspect and one or more further parts or components (3) and by assembling them, connecting them or putting them together.

If the one or more further parts or components (3) are also plastic components, such as for example thermoplastic polymers, the modified three-dimensional product (2) as defined hereinbefore can be produced by co-extrusion of (i) a melt of the polymer, the spherical glass beads, the pigments flakes and the optional further ingredients as defined in the context of the first aspect in the relative amounts as defined in the context of the first aspect and (ii) one or more further polymers that are to form the one or more further plastic parts or components (3).

As will be appreciated by those skilled in the art, a modified three-dimensional product (2) comprising one or more three-dimensional plastic products (1) according to the first aspect and one or more further plastic parts or components (3) produced using co-extrusion can in turn be provided with further parts or components (3) to provide another modified three-dimensional product (2).

## Laser Imaging Detection And Ranging (LIDAR) process

A fifth aspect of the invention concerns a Laser Imaging Detection And Ranging (LIDAR) process of the three-dimensional plastic product (1) according to the first aspect or of the modified three-dimensional product (2) according to the second aspect, said process comprising the steps of:

(i) providing a LIDAR device comprising a source of electromagnetic radiation, a receiver and optionally a Global Positioning System (GPS);
(ii) transmitting electromagnetic radiation from the source of electromagnetic radiation of the LIDAR device to the three-dimensional plastic product (1) or to the modified three-dimensional product (2);
(iii) scanning the electromagnetic radiation reflected by the three-dimensional plastic product (1) or by the modified three-dimensional product (2) with the receiver of the LIDAR device; and
(iv) computing from the differences between the transmitted electromagnetic radiation and the scanned reflected electromagnetic radiation, preferably as a function of time, one or more of:

- the distance between the three-dimensional plastic product (1) or the modified three-dimensional product (2) and the LIDAR device;
- the acceleration of the three-dimensional plastic product (1) or of the modified three-dimensional product (2);
- the deceleration of the three-dimensional plastic product (1) or of the modified three-dimensional product (2);
- the direction of movement of the three-dimensional plastic product (1) or of the modified three-dimensional product (2);
- the speed of the three-dimensional plastic product (1) or of the modified three-dimensional product (2), preferably the speed relative to that of the LIDAR device; and
- a 3D image of the three-dimensional plastic product (1) or of the modified three-dimensional product (2).

As will be appreciated by those skilled in the art, computing the speed, acceleration, deceleration and direction of movement of the three-dimensional plastic product (1) or of the modified three-dimensional product (2) requires that steps (ii) and (iii) are performed as a function of time.

If the LIDAR device is also equipped with a GPS, the distance between the three-dimensional plastic product (1) or of the modified three-dimensional product (2) and the LIDAR device can also be indicated on a map and the 3D image of the three-dimensional plastic product (1) or of the modified three-dimensional product (2) can be identified on a map.

In a preferred embodiment, the electromagnetic radiation transmitted and scanned in steps (ii) and (iii), respectively, has a wavelength between 740 and 2500 nm, more preferably a wavelength between 750 and 1800 nm, even more preferably a wavelength between 780 and 1600 nm, such as 905 nm or 1550 nm.

In an embodiment, the electromagnetic radiation transmitted and scanned in steps (ii) and (iii), respectively, has a wavelength between 740 and 2200 nm, such as between 740 and 2000 nm, between 740 and 1800 nm, between 740 and 1700 nm, between 740 and 1650 nm or between 740 and 1600 nm.

In another embodiment, the electromagnetic radiation transmitted and scanned in steps (ii) and (iii), respectively, has a wavelength between 750 and 2500 nm, such as between 780 and 2500 nm, between 800 and 2500 nm, between 825 and 2500 nm, between 850 and 2500 nm and between 875 and 2500 nm.

***Uses***

In a sixth aspect, the invention concerns the use of the three-dimensional plastic product (1) according to the first aspect in the form of a filament or pellet, wherein the polymer is a thermoplastic polymer, in the production of a ready-to-use three-dimensional plastic product (1) according to the first aspect, wherein the polymer is a thermoplastic polymer.

In a seventh aspect, the invention concerns the use of the three-dimensional plastic product (1) according to the first aspect or of the modified three-dimensional product (2) according to the second aspect,

- in Laser Imaging Detection And Ranging (LIDAR) of said three-dimensional plastic product (1) or of said modified three-dimensional product (2); and/or
- to improve the visibility of said three-dimensional plastic product (1) or of said modified three-dimensional product (2) under visible light conditions; and/or
- to prepare a three-dimensional image of said three-dimensional plastic product (1) or of said modified three-dimensional product (2).

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb *'to comprise'* and its conjugations are used in its non-limiting sense to mean that items following the word are included, but items not specifically mentioned are not excluded. In addition, reference to an element by the indefinite article *'a'* or *'an'* does not exclude the possibility that more than one of the element is present, unless the context clearly requires that there be one and only one of the elements. The indefinite article *'a'* or *'an'* thus usually means *'at least one'.*

## EXAMPLES

***Materials***

*Spherical glass beads*

- Micro glass beads (C), obtained from Jianxi Sunflex Light Retroreflective Material Co, Ltd., China, having a refractive index of about 2.2, measured at a wavelength $\lambda$ of 589 nm, having a median particle diameter D50 of about 40.37 $\mu$m, a D10 diameter of 37.32 $\mu$m and a D90 diameter of 44.11 $\mu$m, as measured with laser diffraction.
- Micro glass beads (CS), obtained from Jianxi Sunflex Light Retroreflective Material Co, Ltd., China, having a refractive index of about 2.2, measured at a wavelength $\lambda$ of 589 nm, having a median particle diameter D50 of about 27.49 $\mu$m, a D10 diameter of 20.64 $\mu$m and a D90 diameter of 33.24 $\mu$m, as measured with laser diffraction.
- Micro glass beads (CSS), obtained from Jianxi Sunflex Light Retroreflective Material Co, Ltd., China, having a refractive index of about 2.2, measured at a wavelength $\lambda$ of 589 nm, having a median particle diameter D50 of 22.00 $\mu$m, a D10 diameter of 16.33 $\mu$m and a D90 diameter of 26.21 $\mu$m, as measured with laser diffraction.
- Micro glass beads (CSTL), obtained from Swarco, Austria, having a refractive index of about 2.1, measured at a

wavelength λ of 589 nm, having a median particle diameter D50 of 7.80 μm, a D10 diameter of 3.27 μm and a D90 diameter of 20.2 μm, as measured with laser diffraction.

- HAC-coated micro glass beads (CSX), obtained from Jianxi Sunflex Light Retroreflective Material Co, Ltd., China, having a refractive index of about 2.2, measured at a wavelength λ of 589 nm, having a median particle diameter D50 of 26.46 μm, a D10 diameter of 22.94 μm and a D90 diameter of 29.57 μm, as measured with laser diffraction.
- HAC-coated micro glass beads (NSX), obtained from Jianxi Sunflex Light Retroreflective Material Co, Ltd., China, having a refractive index of about 1.9, measured at a wavelength λ of 589 nm, having a median particle diameter D50 of 26.13 μm, a D10 diameter of 19.51 μm and a D90 diameter of 31.41 μm, as measured with laser diffraction.

*Polymers*

- Polypropylene homopolymer (PP), obtained from Sabic
- Polystyrene pellets (PS), obtained from Total
- Low-density polyethylene (LDPE) granules, obtained from Sabic
- High-density polyethylene (HDPE) pellets, obtained from Lyondell Basell

*Further ingredients*

- Pigment White 6
- U.5.1031.m Blue
- PO72 - orange pigment
- PZ125 black
- PZ810/50 black
- SINLOIHI FZ-6014 Orange, obtained from Sinloihi Co., Ltd., Japan ('SINL.')

*Pigment flakes*

- KCPP® KC123, obtained from Kuncai Americas, (Mica, $TiO_2$ and $SnO_2$), pearlescent effect pigment in silver white shade, 5-30 μm,
- Xillamaya T60-23 SW Galaxy Blue, obtained from Fujian Kuncai Material Technology, synthetic mica pearlescent pigment flakes, 6-30 μm
- Xillamaya T60-10 SW, obtained from Fujian Kuncai Material Technology, (synthetic fluorphlogopite, $TiO_2$, $SnO_2$, $SiO_2$, $Ce_2O_3$), $D_{50}$ diameter 14.5 μm ('Xillam.')
- Iriodin® 9307 Star Gold SW, obtained from Merck KGaA, (Mica, $TiO_2$, $SiO_2$, $Fe_2O_3$ and $SnO_2$, auxiliaries), $D_{50}$ diameter between 21 and 26 μm
- Mastersafe MP 35-20B, obtained from Eckart GmbH, aluminium pigment flakes, $D_{50}$ diameter 35 μm
- KC 8200 10-45 μm, obtained from Fujian Kuncai Material Technology, (synthetic fluorphlogopite, $TiO_2$), $D_{50}$ diameter 20.0 μm
- Xirallic® NXT M260-70 SW Amur Black, obtained from Merck KGaA, ($Fe_3O_4$, $Al_2O_3$, $SiO_2$, auxiliaries), $D_{50}$ diameter between 17 and 23 μm
- Alegrace® Aurous B 21/11-1 Yellow Gold flakes, obtained from Schlenk Metallic Pigments, 8-38 μm
- Aluminium paste Chromos ON/08-01, obtained from Schlenk Metallic Pigments GmbH, surface-treated aluminium pigment flakes, $D_{50}$ diameter of 8 μm
- Zenexo® Copperglow WB 21 OO, obtained from Schlenk Metallic Pigments GmbH, $D_{50}$ diameter of 21 μm
- Zenexo® Golden Shine WB 21 YY, obtained from Schlenk Metallic Pigments GmbH, $D_{50}$ diameter of 21 μm
- Mastersafe MP 68-20B, aluminium pigment flakes, obtained from Eckart GmBH, $D_{50}$ diameter 68 μm ('Master.')
- STAPA PP REFLEXAL 1032/80, aluminium silverdollar pigment, obtained from Eckart GmBH, $D_{50}$ diameter of 10 μm

('STAPA')

- Grandal® P 3600, obtained from Carl Schlenk AG, $D_{50}$ diameter of 31 $\mu$m ('P3600')

***Example 1: preparation of three-dimensional coloured plastic products***

Eighteen three-dimensional coloured plastic products were prepared as follows from the ingredients indicated in Table 1 and Table 2.

First, mono-concentrates were prepared by adding the relevant plastic pellets (PP or LDPE) to a twin screw extruder (Noris ZSC 20), by heating to melt the polymer, by adding the relevant glass beads to the melted plastic mixture via a side feeder, followed by thorough mixing. The resulting strands were cooled and pelletized to become mono-concentrates.

In a second step, the mono-concentrates were used in combination with different colour pigments and pigments flakes in different concentrations to provide 18 final formulations (see Table 1 and Table 2 for the overall compositions of the 18 final formulations). These final formulations were made using a single screw extruder (Noris ESE30), by adding the relevant mono-concentrate, the relevant colour pigment and pigment flakes and optionally additional polymer (PP or LDPE). The mixture of components was roughly blended by handshake/stir for 1 minute and added to the extruder, to be heated, melted and mixed at increased temperature. The resulting strands were cooled and pelletized into final formulation product pellets.

In a third step, the relevant final formulation product pellets were added to an injection moulding machine (ALLROUNDER 320 C 500 - 100) to be extruded after heating into a mirror like mould form to produce plastic products with a length of 10 cm, a width of 5 cm and 3 areas of different thicknesses (2 mm, 3 mm and 4 mm) in the direction of the length. All three-dimensional coloured plastic products, *i.e.* including those comprising spherical glass beads, had very smooth outer surfaces. The glass beads did not protrude from the outer surfaces, *i.e.* the surfaces were ungrained.

**Table 1: overall compositions final formulations / products**

| **Final formulation / Product** | **8f (Comp.)** | **4f** | **4b (Comp.)** | **10f** | **2b (Comp.)** | **5d** | **1h (Comp.)** | **2h** | **5h** |
|---|---|---|---|---|---|---|---|---|---|
| **Colour** | White | White | Blue | Blue | **Orange** | Orange | Silver | **Silver** | Silver |
| **Polymer (wt.%)** | | | | | | | | | |
| PP | | | | | | | 99.50 | 69.50 | 59.75 |
| LDPE | 85.19 | 53.85 | 99.00 | 51.00 | 99.00 | 55.00 | | | |
| **Sperical glass beads (wt. %)** | | | | | | | | | |
| CS | | 38.46 | | 40.00 | | 40.00 | | 30.00 | 40.00 |
| **Pigment flakes (wt.%)** | | | | | | | | | |
| KCPP® KC123 | 7.41 | 3.85 | | | | | | | |
| Xillamaya T60-23-SW Galaxy Blue | | | | 8.00 | | | | | |
| Xillamaya T60-10-SW | | | | | | 4.00 | | | |
| Chromos ON/08-01 | | | | | | | 0.50 | 0.50 | 0.25 |
| **Further ingredients (wt.%)** | | | | | | | | | |
| Pigment White 6 | 7.41 | 3.85 | | | | | | | |
| U.5.1031.m Blue | | | 1.00 | 1.00 | | | | | |

(continued)

| Further ingredients (wt.%) | | | | | | | | | |
|---|---|---|---|---|---|---|---|---|---|
| PO72 - orange pigment | | | | | 1.00 | 1.00 | | | |
| **Total (wt.%)** | **100.00** | **100.00** | **100.00** | **100.00** | **100.00** | **100.00** | **100.00** | **100.00** | **100.00** |

**Table 2: overall compositions final formulations / products**

| **Final formulation / product** | **7e (Comp.)** | **8e** | **7f** | **6e (Comp.)** | **6d** | **10a** | **9e (Comp.)** | **6b** | **10e** |
|---|---|---|---|---|---|---|---|---|---|
| **Colour** | Aurora | Aurora | Aurora | Black | Black | Black | Gold | Gold | Gold |
| **Polymer (wt.%)** | | | | | | | | | |
| LDPE | 99.50 | 59.50 | 59.50 | 90.00 | 50.50 | 53.68 | 99.00 | 58.08 | 59.20 |
| **Sperical glass beads (wt. %)** | | | | | | | | | |
| C | | | 40.00 | | | | | | |
| CS | | 40.00 | | | 39.60 | 39.84 | | 40.40 | 39.80 |
| **Pigment flakes (wt.%)** | | | | | | | | | |
| Iriodin 9307 Star Gold SW | | | | | | | | 1.52 | |
| Mastersafe MP 35-20B | | | | | | 0.50 | | | |
| Xirallic® NXT M260-70 SW Amur Black | | | | 4.00 | 3.96 | | | | |
| Alegrace® Aurous B 21/11-1 Yellow Gold | 0.50 | 0.50 | 0.50 | | | | | | |
| Zenexo Copper-glow WB 21 OO | | | | | | | 0.50 | | 0.50 |
| Zenexo Golden Shine WB 21 YY | | | | | | | 0.50 | | 0.50 |
| **Further ingredients (wt.%)** | | | | | | | | | |
| PZ125 black | | | | 6.00 | 5.94 | | | | |
| PZ810/50 black | | | | | | 5.98 | | | |
| **Total (wt. %)** | **100.00** | **100.00** | **100.00** | **100.00** | **100.00** | **100.00** | **100.00** | **100.00** | **100.00** |

***Example 2: assessment of retroreflective properties and LIDAR-detectability***

The general (off centre) retroreflection of the 18 three-dimensional coloured plastic products produced in Example 1 was visually inspected and assessed by directing the beam of a torch under an angle of 30° with the axis perpendicular to the main surface of the three-dimensional coloured plastic products, wherein the sightline of the eyes substantially coincides with the beam of the torch, and by visually determining whether or not and to which extent retroreflection is observed.

The qualification ’1’ means very little to no retroflection at all and the qualification ’4’ means very good retroreflection. Details are presented in Table 3. As can be inferred from Table 3, retroreflection is much better for the three-dimensional coloured plastic products according to the invention than for the comparative products. The retroflection of the surfaces of the three-dimensional coloured plastic products according to the invention is good to very good.

LIDAR-detectability was determined by scanning the surface of the eighteen three-dimensional coloured plastic products produced in Example 1 with a Livox Tele-15 LIDAR-device (Livox Technology Company Co., Ltd) at a wavelength of 905 nm under an angle of about 30° with the axis perpendicular to the main surface. Scanning took place under daylight conditions. The Tele-15 LIDAR device was placed at a distance of about 20 meters from the main surface of the three-dimensional coloured plastic products. The Tele-15 LIDAR-device calculates reflectivity values for different areas of the main surface of the three-dimensional coloured plastic products that is scanned, based on the ratio of reflected laser energy over incident laser energy, and generates a point cloud from these data. Every point in the point cloud has a corresponding reflectivity value. The reflectivity values obtained for each three-dimensional coloured plastic product were ordered form low to high and the highest value was taken as the reflectivity score (reference value) for that product. Since all products scanned were identical as regards form and since they were scanned under the same angle at the same distance, their LIDAR-detectability can be compared by comparing their reflectivity scores. Reflectivity scores thus obtained are indicated in Table 3.

As can be inferred from Table 3, LIDAR-detectability is much better for the three-dimensional coloured plastic products according to the invention than for the comparative products.

**Table 3: retroreflection and LIDAR-detectability**

| **Final formulation / product** | **8f (Comp.)** | **4f** | **4b (Comp.)** | **10f** | **2b (Comp.)** | **5d** |
|---|---|---|---|---|---|---|
| | White | White | Blue | Blue | Orange | Orange |
| Retroreflection | 1 | 4 | 1 | 4 | 1 | 4 |
| LIDAR-detectability | 50 | 148 | 13 | 130 | 29 | 119 |
| **Final formulation / product** | **1h (Comp.)** | **2h** | **5h** | **7e (Comp.)** | **8e** | **7f** |
| | Silver | Silver | Silver | Aurora | Aurora | Aurora |
| Retroreflection | 1 | 4 | 4 | 1 | 4 | 4 |
| LIDAR-detectability | 17 | 51 | 61 | 10 | 73 | 133 |
| **Final formulation / product** | **6e (Comp.)** | **6d** | **10a** | **9e (Comp.)** | **6b** | **10e** |
| | Black | Black | Black | Gold | Gold | Gold |
| Retroreflection | 1 | 3 | 4 | 1 | 4 | 4 |
| LIDAR-detectability | 1 | 12 | 20 | 13 | 65 | 102 |

***Example 3: production of three-dimensional plastic products***

Three-dimensional plastic products were prepared as follows. In a first step, 5 mono-concentrates (MC1 to MC5) were prepared, having the recipes presented in Table 4.

**Table 4: compositions mono-concentrates (MC1 to MC5**

| **MC** | **Spherical glass beads** | | **Polymer** | |
|---|---|---|---|---|
| | Type | wt.% | Type | wt.% |
| MC1 | CSS | 70 | LDPE | 30 |
| MC2 | CSS | 50 | PS | 50 |
| MC3 | CSTL | 70 | LDPE | 30 |
| MC4 | NSX | 70 | LDPE | 30 |
| MC5 | CSX | 70 | LDPE | 30 |

The mono-concentrates were prepared by adding the relevant plastic pellets to a twin screw extruder (Noris ZSC 20), heating to 150 °C (LDPE) or 200 °C (PS), and by adding via a side feeder the relevant glass beads to the melted plastic mixture, followed by thorough mixing. The resulting strands were cooled and pelletized to become mono-concentrates.

In a second step, the mono-concentrates were used in combination with different colour pigments and pigment flakes, in different concentrations, and in different combinations to provide 43 final formulations (V1 to V43). These final formulations were made using a single screw extruder (Noris ESE30), by adding the relevant mono-concentrate('s), the

relevant pigment/pigment flakes and sufficient additional High Density Poly Ethylene (HDPE) or Polystyrene (PS). The mixture of components was roughly blended by handshake/stir for 1 minute and added to the extruder to be heated, melted and mixed at 200 °C. The resulting strands were cooled and pelletized into final formulation product pellets.

In a third step, the relevant final formulation product pellets were added to an injection moulding machine (ALLROUNDER 320 C 500 - 100) to be extruded after heating to 200 °C-220 °C into a mirror like mould form to produce three-dimensional plastic products with a length of 10 cm, a width of 5 cm and 3 areas of different thicknesses (2 mm, 3 mm and 4 mm) in the direction of the length. All three-dimensional plastic products, *i.e.* including those comprising spherical glass beads, had very smooth outer surfaces. The glass beads did not protrude from the outer surfaces, *i.e.* the surfaces were ungrained.

The recipes of the 43 final formulations V1 to V43 are shows in Table 5.

**Table 5: final formulations V1 to V43**

| | Polymers | | | | Spherical glass beads | | | | | Pigments flakes | | | | | Pigm. |
|---|---|---|---|---|---|---|---|---|---|---|---|---|---|---|---|
| **Sample** | **LDPE wt.%** | **HDPE wt.%** | **PS wt.%** | **Total wt.%** | **CSS wt.%** | **CSTL wt.%** | **CSX wt.%** | **NSX wt.%** | **Total wt.%** | **P3600 wt.%** | **Stapa wt.%** | **Master. wt.%** | **Xillam. wt.%** | **Total wt.%** | **SINL. wt.%** |
| **V1** | | 99.5 | | **99.5** | | | | | **0.0** | 0.5 | | | | **0.5** | |
| **V2** | | 99.0 | | **99.0** | | | | | **0.0** | 1.0 | | | | **1.0** | |
| **V3** | | | 99.5 | **99.5** | | | | | **0.0** | 0.5 | | | | **0.5** | |
| **V4** | | | 99.0 | **99.0** | | | | | **0.0** | 1.0 | | | | **1.0** | |
| **V5** | 17.1 | 42.5 | | **59.6** | 39.9 | | | | **39.9** | 0.5 | | | | 0.5 | |
| **V6** | 17.1 | 42.0 | | **59.1** | 39.9 | | | | **39.9** | 1.0 | | | | **1.0** | |
| **V7** | | | 59.5 | **59.5** | 40.0 | | | | **40.0** | 0.5 | | | | **0.5** | |
| **V8** | | | 59.0 | **59.0** | 40.0 | | | | **40.0** | 1.0 | | | | **1.0** | |
| **V9** | 17.1 | 42.5 | | **59.6** | | 39.9 | | | **39.9** | 0.5 | | | | **0.5** | |
| **V10** | 17.1 | 42.0 | | **59.1** | | 39.9 | | | **39.9** | 1.0 | | | | **1.0** | |
| **V11** | 17.1 | 42.5 | | **59.6** | | | | 39.9 | **39.9** | 0.5 | | | | **0.5** | |
| **V12** | 17.1 | 42.0 | | **59.1** | | | | 39.9 | **39.9** | 1.0 | | | | **1.0** | |
| **V13** | 17.1 | 42.5 | | **59.6** | | | 39.9 | | **39.9** | 0.5 | | | | **0.5** | |
| **V14** | 17.1 | 42.0 | | **59.1** | | | 39.9 | | **39.9** | 1.0 | | | | **1.0** | |
| **V15** | 8.6 | 70.5 | | **79.1** | 19.9 | | | | **19.9** | 1.0 | | | | **1.0** | |
| **V16** | | | 79.0 | **79.0** | 20.0 | | | | **20.0** | 1.0 | | | | **1.0** | |
| **V17** | 8.6 | 70.5 | | **79.1** | | 19.9 | | | **19.9** | 1.0 | | | | **1.0** | |
| **V18** | 8.6 | 70.5 | | **79.1** | | | | 19.9 | **19.9** | 1.0 | | | | **1.0** | |
| **V19** | 8.6 | 70.5 | | **79.1** | | | 19.9 | | **19.9** | 1.0 | | | | **1.0** | |
| **V20** | 2.1 | 91.9 | | **94.0** | 5.0 | | | | **5.0** | 1.0 | | | | **1.0** | |
| **V21** | | | 94.0 | **94.0** | 5.0 | | | | **5.0** | 1.0 | | | | **1.0** | |
| **V22** | 2.1 | 91.9 | | **94.0** | | 5.0 | | | **5.0** | 1.0 | | | | **1.0** | |
| **V23** | 2.1 | 91.9 | | **94.0** | | | | 5.0 | **5.0** | 1.0 | | | | **1.0** | |
| **V24** | 2.1 | 91.9 | | **94.0** | | | 5.0 | | **5.0** | 1.0 | | | | **1.0** | |
| **V25** | | 90.0 | | **90.0** | | | | | **0.0** | | | | 8.0 | **8.0** | 2.0 |

(continued)

| | Polymers | | | | Spherical glass beads | | | | | Pigments flakes | | | | | Pigm. |
|---|---|---|---|---|---|---|---|---|---|---|---|---|---|---|---|
| Sample | LDPE wt.% | HDPE wt.% | PS wt.% | Total wt.% | CSS wt.% | CSTL wt.% | CSX wt.% | NSX wt.% | Total wt.% | P3600 wt.% | Stapa wt.% | Master. wt.% | Xillam. wt.% | Total wt.% | SINL. wt.% |
| **V26** | 12.9 | 47.0 | | **59.9** | 30.1 | | | | **30.1** | | | | 8.0 | **8.0** | 2.0 |
| **V27** | | 86.0 | | **86.0** | | | | | **0.0** | | | | 8.0 | **8.0** | 6.0 |
| **V28** | 12.9 | 43.0 | | **55.9** | 30.1 | | | | **30.1** | | | | 8.0 | **8.0** | 6.0 |
| **V29** | 12.9 | 43.0 | | **55.9** | | 30.1 | | | **30.1** | | | | 8.0 | **8.0** | 6.0 |
| **V30** | | 93.8 | | **93.8** | | | | | **0.0** | 0.2 | | | | **0.2** | 6.0 |
| **V31** | 12.9 | 50.8 | | **63.7** | 30.1 | | | | **30.1** | 0.2 | | | | **0.2** | 6.0 |
| **V32** | | 94.0 | | **94.0** | | | | | **0.0** | | | | | **0.0** | 6.0 |
| **V33** | 12.9 | 51.0 | | **63.9** | 30.1 | | | | **30.1** | | | | | **0.0** | 6.0 |
| **V34** | 2.1 | 87.0 | | **89.1** | 4.9 | | | | **4.9** | | | | | **0.0** | 6.0 |
| **V35** | 8.7 | 70.0 | | **78.7** | 10.1 | 10.2 | | | **20.3** | 1.0 | | | | **1.0** | |
| **V36** | 4.5 | 84.0 | | **88.5** | 5.2 | 5.3 | | | **10.5** | 10. | | | | **1.0** | |
| **V37** | | 99.0 | | **99.0** | | | | | **0.0** | | 1.0 | | | **1.0** | |
| **V38** | 8.7 | 70.0 | | **78.7** | 20.3 | | | | **20.3** | | 1.0 | | | **1.0** | |
| **V39** | 8.7 | 70.0 | | **78.7** | | 20.3 | | | **20.3** | | 1.0 | | | **1.0** | |
| **V40** | 8.7 | 70.1 | | **78.8** | | 4.2 | | 16.1 | **20.3** | 0.9 | | | | **0.9** | |
| **V41** | 8.7 | 71.0 | | **79.7** | | 4.2 | | 16.1 | **20.3** | | | | | **0.0** | |
| **V42** | | 99.0 | | **99.0** | | | | | **0.0** | | | 1.0 | | **1.0** | |
| **V43** | 8.7 | 70.0 | | **78.7** | | 20.3 | | | **20.3** | | | 1.0 | | **1.0** | |

***Example 4: Comparative Examples according to the prior art***

Final formulation V40 is in accordance with Example 1 of WO2005/033194A1. Final formulation V41 is in accordance with comparative Example A of WO2005/033194A1. The formulations in the examples of WO2005/033194A1 comprise HAC-coated $BaTiO_3$ microspheres of 38 μm and uncoated $BaTiO_3$ microspheres of 8.5 μm, obtained from Prizmalite Industries. As explained hereinbefore, the spherical glass beads used in WO2005/033194A1 have a refractive index of 1.9. Final formulation V40 and V41, however, comprise uncoated microspheres of 7.8 μm having a refractive index of 2.1. This does, however, not influence the conclusions that can be drawn from the results.

See below Table 6 summarizing the recipes. According to the example of WO2005/033194A1, the retroreflection of an ungrained surface of a product produced from final formulation V40 was about 30 to 50% higher than the retroreflection of an ungrained surface of a product produced from final formulation V41, according to the *'qualitative view by those of ordinary skill in the art'.*

Retroreflection of the three-dimensional plastic products produced from final formulation V40 and V41 (both not in accordance with the invention) was visually assessed with torch light under an angle of 45° with the axis perpendicular to the main surface of the plastic products. The viewing angle was along the direction of the torch light, *i.e.* also under an angle of 45° with the axis perpendicular to the main surface of the three-dimensional plastic products. It was concluded from the visual assessment that ungrained surfaces of the three-dimensional plastic product produced from final formulation V40 (in accordance with Example 1 of WO2005/033194A1) instead of being 30 to 50% better showed less retroreflection than ungrained surfaces of the three-dimensional plastic product produced from final formulation V41 (in accordance with Comparative Example A of WO2005/033194A1). See Table 6.

Moreover, both the ungrained surfaces of the three-dimensional plastic product produced from final formulation V40 and produced from final formulation V41 showed insufficient retroreflection under an angle of 45° to be of any relevance. This result would have been even worse when final formulations V40 and V41 had contained a carbon black pigment (as applied in Example 1 and Comparative Example A of WO2005/033194A1).

Table 6 also summarizes the recipes of final formulations V15, V17 and V35. Retroreflection of the three-dimensional plastic products produced from final formulations V15, V17 and V35 (all in accordance with the invention) was also visually assessed with torch light under an angle of 45° with the axis perpendicular to the main surface of the three-dimensional plastic products. As shown in Table 6, the ungrained surfaces of the three-dimensional plastic products produced from final formulations V15, V17 and V35 demonstrate considerably higher retroreflection than ungrained surfaces of the three-dimensional plastic products produced from final formulations V40 and V41.

LIDAR-detectability of the surfaces of the three-dimensional plastic products produced from final formulations V40, V41, V15, V17 and V35 was determined by scanning their main surfaces with a Livox Tele-15 LIDAR-device (Livox Technology Company Co., Ltd) at a wavelength of 905 nm under an angle of about 30° with the axis perpendicular to the main surface of the three-dimensional plastic products. Scanning took place under daylight conditions. The Tele-15 LIDAR device was placed at a distance of about 17 meters from the main surface of the three-dimensional plastic products.

The Tele-15 LIDAR-device calculates reflectivity values for different areas of the surface that is scanned, based on the ratio of reflected laser energy over incident laser energy, and generates a point cloud from these data. Every point in the point cloud has a corresponding reflectivity value. The reflectivity values obtained for each three-dimensional plastic product were ordered form low to high and the highest value was taken as the reflectivity score (reference value) for that product. Since all products scanned were identical as regards form and since they were scanned under the same angle at the same distance, their LIDAR-detectability can be compared by comparing their reflectivity scores. Reflectivity scores thus obtained are indicated in Table 6.

It was concluded that the main surface of the three-dimensional plastic product produced from final formulation V40 (in accordance with Example 1 of WO2005/033194A1) had lower LIDAR-detectability than the main surface of the three-dimensional plastic product produced from final formulation V41 (in accordance with Comparative Example A of WO2005/033194A1). As shown in Table 6, the main surfaces of three-dimensional plastic products produced from final formulations V15, V17 and V35 demonstrate considerably higher LIDAR-detectability than the main surfaces of three-dimensional plastic products produced from final formulations V40 and V41.

**Table 6: retroreflection and LIDAR-detectability**

| Sample | Glass beads | | | Alu flakes $D_{50}$ 31 µm | Polymer | Retroreflection | Lidar reflectivity score |
|---|---|---|---|---|---|---|---|
| | CSTL | CSS | NSX | | | | |
| | RI 2.1 | RI 2.2 | RI 1.9 | | | | |
| | $D_{50}$ 7.8 µm | $D_{50}$ 22.0 µm | $D_{50}$ 26.1 µm | | | | |
| | Uncoated | Uncoated | HAC coated | | | | |
| | wt.% | wt.% | wt.% | wt.% | wt.% | [-] | [-] |
| **V15** | | 20 | | 0.9 | 79.1 | + | 26 |
| **V17** | 20 | | | 0.9 | 79.1 | ++ | 25 |
| **V35** | 10 | 10 | | 0.9 | 79.1 | + | 22 |
| **V40** | 4 | | 16 | 0.9 | 79.1 | -- | 10 |
| **V41** | 4 | | 16 | - | 80 | - | 15 |

***Example 5: retroreflectivity and LIDAR-detectability of three-dimensional plastic products***

Retroreflection and LIDAR-detectability of surfaces of three-dimensional plastic products produced from several final formulations chosen from V1 to V43 were tested using the methods as defined in Example 4. The results of the retroreflection test are shown in Figure 7. Figure 7 shows the retroreflection of the surfaces of 20 products (4 rows, 5 columns). The characteristics of the different final formulations used in this test are briefly summarized in Table 7. Lidar reflectivity scores are also indicated in Table 7.

**Table 7: characteristics final formulations**

| | Col. 1 | Col. 2 | Col. 3 | Col. 4 | Col. 5 |
|---|---|---|---|---|---|
| | Final formulation / glass [wt.%] / flakes [wt.%] / lidar reflectivity score [-] | | | | |
| | No glass beads | CSS | CSTL | NSX | CSX |
| | | RI2.2 | RI2.1 | RI 1.9 | RI2.2 |
| | | $D_{50}$ 22.0 µm | $D_{50}$ 7.8 µm | $D_{50}$ 26.1 µm | $D_{50}$ 26.5 µm |
| | | Uncoated | Uncoated | HAC coated | HAC coated |
| **Row 1** | **V2** / 0 / 1 / 8 | **V5** / 40 / 0.5 / 46 | **V9** / 40 / 0.5 / 44 | **V11** / 40 / 0.5 / 22 | **V13** / 40 / 0.5 / 24 |
| **Row 2** | **V2** / 0 / 1 /8 | **V6** / 40 / 1 / 51 | **V10** / 40 / 1 / 40 | **V12** / 40 / 1 / 24 | **V14** / 40 / 1 / 27 |
| **Row 3** | **V2** / 0 / 1 /8 | **V15** / 20 / 1 / 34 | **V17** / 20 / 1 / 28 | **V18** / 20 / 1 / 15 | **V19** / 20 / 1 / 20 |
| **Row 4** | **V2** / 0 / 1 /8 | **V20** / 5 / 1 / 15 | **V22** / 5 / 1 / 17 | **V23** / 5 / 1 / 12 | **V24** / 5 / 1 / 13 |

It can be concluded from a comparison of columns 2-5 in Figure 7 and in Table 7 that final formulations comprising uncoated spherical glass beads (CSS or CSTL) having a high refractive index of 2.2/2.1 combined with pigment flakes result in the highest retroreflection, whereas final formulations comprising HAC coated spherical glass beads (NSX or CSX) having refractive indices of 1.9 or 2.2 combined with pigment flakes hardly show any retroreflection. Accordingly, a HAC coating decreases retroreflection significantly in products wherein the spherical glass beads do not protrude from the polymer matrix. It can further be concluded from a comparison of columns 2-5 in Table 7 that final formulations comprising uncoated spherical glass beads (CSS or CSTL) having a high refractive index of 2.2/2.1 combined with pigment flakes result in much higher LIDAR-detectability than final formulations comprising HAC coated spherical glass beads (NSX or CSX) having refractive indices of 1.9 or 2.2 combined with pigment flakes in products wherein the spherical glass beads do not protrude from the polymer matrix.

## Claims

1. Three-dimensional plastic product (1) with an outer surface (A), wherein at least part (B) of the outer surface (A) has retroreflective properties, wherein said three-dimensional plastic product (1) consists, based on the total weight of the three-dimensional plastic product (1), of:

   • 25 - 95.9 wt.% of a polymer chosen from thermoplastic and thermoset polymers;
   • 4 - 70 wt.% of spherical glass beads, wherein said spherical glass beads have a median particle diameter D50, as measured with laser diffraction, between 1 and 150 μm, and a refractive index, measured at a wavelength λ of 589 nm, between 2.0 and 2.8, wherein the spherical glass beads are not hemispherically coated with a light-reflective coating;
   • 0.1 - 15 wt.% of pigment flakes chosen from the group consisting of metallic pigment flakes, pearlescent pigment flakes or a combination thereof, said pigment flakes having a median diameter, as measured with laser diffraction, between 1 and 75 μm, wherein said pigment flakes preferably have a thickness smaller than 1 μm and an aspect ratio (flake diameter/thickness) of at least 10; and
   • 0 - 15 wt.% of one or more further ingredients,
   wherein the minimum size of the plastic product (1) in all directions is at least 500 μm, and
   wherein part (B) of the outer surface (A) with retroreflective properties comprises one or more outer retroreflective surface parts (C) wherein the spherical glass beads do not protrude from the polymer matrix.

2. Three-dimensional plastic product (1) according to claim 1, wherein the median diameter of said pigment flakes is greater than 35% of the median particle diameter D50 of said spherical glass beads, preferably greater than 38%, such as greater than 40%, greater than 45%, greater than 50%, greater than 55%, greater than 60%, greater than 70%, greater than 90%, greater than 110% or greater than 130%.

3. Three-dimensional plastic product (1) according to claim 1 or 2, wherein the amount of the pigment flakes is 1 part by weight to between 1 and 80 part by weight of the spherical glass beads, preferably 1 part by weight to between 1 and 40 part by weight of the spherical glass beads, more preferably 1 part by weight to between 1 and 30 part by weight of the spherical glass beads.

4. Three-dimensional plastic product (1) according to any one of claims 1 to 3, wherein the one or more further ingredients do not comprise one or more of:

   • spherical glass beads that are hemispherically coated with a light-reflective coating;
   • spherical glass beads with a refractive index, measured at a wavelength of 589 nm, of 1.93 or lower; and
   • spherical glass beads that are coated with a material which is repellent to the polymer.

5. Three-dimensional plastic product (1) according to any one of claims 1 to 4, wherein the further ingredients are chosen from the group consisting of rheology modifiers, foam control agents, luminescent agents, UV-absorbers, plasticizers, reinforcement fibers, preservatives, dyes, curing initiators, organic pigments, inorganic pigments other than the metallic pigment flakes and pearlescent pigment flakes, and combinations thereof.

6. Three-dimensional plastic product (1) according to any one of claims 1 to 5, wherein the metallic pigment flakes and pearlescent pigment flakes are chosen from the group consisting of:

   (I) Metal pigment flakes or mica pigment flakes, optionally coated with at least one layer of one or more components chosen from the group consisting of metal oxides, metals, metal sulphides, titanium suboxides, titanium oxynitrides, FeO(OH), $SiO_2$, $B_2O_3$, $GeO_2$, $MgF_2$, metal alloys, rare earth compounds, and optionally coated with an outer layer comprising one or more colorants and a binder;
   (II) Pigment flakes comprising $Al_2O_3$, $SiO_2$, glass, ceramic, graphite or mica platelets coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder;
   (III) Pigment flakes comprising $Al_2O_3$ platelets doped with one or more components chosen from the group consisting of $TiO_2$, $ZrO_2$, $SiO_2$, $SnO_2$, $In_2O_3$, ZnO and iron oxide, coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder.

**7.** Three-dimensional plastic product (1) according to any one of claims 1 to 6, wherein said spherical glass beads have a refractive index, measured at a wavelength $\lambda$ of 589 nm, between 2.0 and 2.6, preferably between 2.1 and 2.4.

**8.** Three-dimensional plastic product (1) according to any one of claims 1 to 7, comprising a thermoplastic polymer, wherein the thermoplastic polymer is chosen from the group consisting of homopolymers and copolymers of polyethylene (PE, LDPE, HDPE, LLDPE), polypropylene (PP), polyvinylchloride (PVC), polystyrene (PS), polymethylmethacrylate (PMMA), polyamide (PA), polyoxymethylene (POM), polycarbonate (PC), polyethylene terephthalate (PET), polyethylene terephthalate glycol (PETG), polysulfone (PSU), polyimide (PI), polybutene (PB), polyether ether ketone (PEEK), poly(acrylonitrile butadiene styrene) (ABS), poly(acrylonitrile butadiene acrylate) (ABA), poly(acrylic styrene acrylonitrile) (ASA), poly(lactic acid) (PLA), nylon and blends thereof.

**9.** Three-dimensional plastic product (1) according to any one of claims 1 to 7, comprising a thermoset polymer, wherein the thermoset polymer is chosen from the group consisting of phenol formaldehyde (PF), urea formaldehyde (UF), melamine formaldehyde (MF), epoxies (EP), polyurethanes (PU) and unsaturated polyester (UP).

**10.** Three-dimensional plastic product (1) according to any one of claims 1 to 8, in the form of a filament or a pellet, wherein the polymer is a thermoplastic polymer.

**11.** Modified three-dimensional product (2) comprising:

- one or more three-dimensional plastic products (1) according to any one of claims 1 to 10 and one or more further parts or components (3) attached thereto; or
- one or more further parts or components (3) and one or more three-dimensional plastic products (1) according to any one of claims 1 to 10 attached thereto,

with the proviso that at least part of the one or more outer retroreflective surface parts (C) of the three-dimensional plastic products (1) according to the first aspect is not covered by the one or more further parts or components (3).

**12.** Process for producing the three-dimensional plastic product (1) with retroreflective properties according to any one of claims 1 to 8 or 10, wherein the polymer is a thermoplastic polymer, said process comprising the steps of:

(a) providing the thermoplastic polymer, the spherical glass beads, the pigments flakes and the optional further ingredients;
(b) compounding the ingredients provided in step (a) at a temperature above the melting point of the thermoplastic polymer;
(c) providing the mixture obtained in step (b) into a mould or extruding the mixture obtained in step (b); and
(d) cooling the mixture in the mould to a temperature below the melting point of the thermoplastic polymer and removing the three-dimensional plastic product (1) with retroreflective properties from the mould or cooling the extrudate to a temperature below the melting point of the thermoplastic polymer to provide the three-dimensional plastic product (1) with retroreflective properties.

**13.** Process for producing the three-dimensional plastic product (1) with retroreflective properties according to any one of claims 1 to 7 or 9, wherein the polymer is a thermoset polymer, said process comprising the steps of:

(a) providing a thermoset curable resin, the spherical glass beads, the pigments flakes and the optional further ingredients;
(b) mixing the ingredients provided in step (a);
(c) providing the mixture obtained in step (b) into a mould;
(d) curing the mixture in the mould to provide the three-dimensional plastic product (1) with retroreflective properties; and
(e) removing the three-dimensional plastic product (1) with retroreflective properties from the mould.

**14.** Laser Imaging Detection And Ranging (LIDAR) process of the three-dimensional plastic product (1) according to any one of claims 1 to 10 or of the modified three-dimensional product (2) according to claim 11, said process comprising the steps of:

(i) providing a LIDAR device comprising a source of electromagnetic radiation, a receiver and optionally a Global Positioning System (GPS);

(ii) transmitting electromagnetic radiation from the source of electromagnetic radiation of the LIDAR device to the three-dimensional plastic product (1) or to the modified three-dimensional product (2);
(iii) scanning the electromagnetic radiation reflected by the three-dimensional plastic product (1) or by the modified three-dimensional product (2) with the receiver of the LIDAR device; and
(iv) computing from the differences between the transmitted electromagnetic radiation and the scanned reflected electromagnetic radiation, preferably as a function of time, one or more of:

- the distance between the three-dimensional plastic product (1) or the modified three-dimensional product (2) and the LIDAR device;
- the acceleration of the three-dimensional plastic product (1) or of the modified three-dimensional product (2);
- the deceleration of the three-dimensional plastic product (1) or of the modified three-dimensional product (2);
- the direction of movement of the three-dimensional plastic product (1) or of the modified three-dimensional product (2);
- the speed of the three-dimensional plastic product (1) or of the modified three-dimensional product (2), preferably the speed relative to that of the LIDAR device; and
- a 3D image of the three-dimensional plastic product (1) or of the modified three-dimensional product (2).

**15.** Use of the three-dimensional plastic product (1) in the form of a filament or pellet according to claim 10, in the production of a ready-to-use three-dimensional plastic product (1) according to any one of claims 1 to 8, wherein the polymer is a thermoplastic polymer.

**16.** Use of the three-dimensional plastic product (1) according to any one of claims 1 to 10 or of the modified three-dimensional product (2) according to claim 11,

- in Laser Imaging Detection And Ranging (LIDAR) of said three-dimensional plastic product (1) or of said modified three-dimensional product (2); and/or
- to improve the visibility of said three-dimensional plastic product (1) or of said modified three-dimensional product (2) under visible light conditions; and/or
- to prepare a three-dimensional image of said three-dimensional plastic product (1) or of said modified three-dimensional product (2).

## Patentansprüche

**1.** Dreidimensionales Kunststoffprodukt (1) mit einer Außenoberfläche (A), wobei mindestens ein Teil (B) der Außenoberfläche (A) retroreflektierende Eigenschaften aufweist, wobei das dreidimensionale Kunststoffprodukt (1), basierend auf dem Gesamtgewicht des dreidimensionalen Kunststoffprodukts (1), besteht aus:

- zu 25-95,9 Gew.-% einem Polymer, das aus thermoplastischen und duroplastischen Polymeren ausgewählt ist;
- zu 4-70 Gew.-% kugelförmigen Glasperlen, wobei die kugelförmigen Glasperlen einen mittleren Teilchendurchmesser D50, wie mit Laserbeugung gemessen, zwischen 1 und 150 $\mu$m und einen Brechungsindex, gemessen bei einer Wellenlänge $\lambda$ von 589 nm, zwischen 2,0 und 2,8 aufweisen, wobei die kugelförmigen Glasperlen nicht halbkugelförmig mit einer lichtreflektierenden Beschichtung beschichtet sind;
- zu 0,1-15 Gew.-% Pigmentflocken, die aus der Gruppe ausgewählt sind, bestehend aus metallischen Pigmentflocken, Perlglanzpigmentflocken oder einer Kombination davon, wobei die Pigmentflocken einen mittleren Durchmesser, wie mit Laserbeugung gemessen, zwischen 1 und 75 $\mu$m, aufweisen, wobei die Pigmentflocken vorzugsweise eine Dicke kleiner als 1 $\mu$m und einen Formfaktor (Flockendurchmesser/Dicke) von mindestens 10 aufweisen; und
- zu 0-15 Gew.-% einem oder mehreren weiteren Inhaltsstoffen,

wobei die minimale Größe des Kunststoffprodukts (1) in allen Richtungen mindestens 500 $\mu$m beträgt, und wobei der Teil (B) der Außenoberfläche (A) mit retroreflektierenden Eigenschaften einen oder mehrere retroreflektierende Außenoberflächenteile (C) umfasst, worin die kugelförmigen Glasperlen nicht aus der Polymermatrix herausragen.

**2.** Dreidimensionales Kunststoffprodukt (1) nach Anspruch 1, wobei der mittlere Durchmesser der Pigmentflocken größer als 35 % des mittleren Teilchendurchmessers D50 der kugelförmigen Glasperlen, vorzugsweise größer als 38

%, wie größer als 40 %, größer als 45 %, größer als 50 %, größer als 55 %, größer als 60 %, größer als 70 %, größer als 90 %, größer als 110 % oder größer als 130 %, ist.

**3.** Dreidimensionales Kunststoffprodukt (1) nach Anspruch 1 oder 2, wobei die Menge der Pigmentflocken 1 Gewichtsteil zu zwischen 1 und 80 Gewichtsteilen der kugelförmigen Glasperlen, vorzugsweise 1 Gewichtsteil zu zwischen 1 und 40 Gewichtsteilen der kugelförmigen Glasperlen, mehr bevorzugt 1 Gewichtsteil zu zwischen 1 und 30 Gewichtsteilen der kugelförmigen Glasperlen, beträgt.

**4.** Dreidimensionales Kunststoffprodukt (1) nach einem der Ansprüche 1 bis 3, wobei der eine oder die mehreren weiteren Inhaltsstoffe nicht eines oder mehrere umfassen von:

- kugelförmigen Glasperlen, die mit einer lichtreflektierenden Beschichtung halbkugelförmig beschichtet sind;
- kugelförmigen Glasperlen mit einem Brechungsindex, gemessen bei einer Wellenlänge von 589 nm, von 1,93 oder weniger; und
- kugelförmigen Glasperlen, die mit einem Material beschichtet sind, das gegenüber dem Polymer abweisend ist.

**5.** Dreidimensionales Kunststoffprodukt (1) nach einem der Ansprüche 1 bis 4, wobei die weiteren Inhaltsstoffe aus der Gruppe ausgewählt sind, bestehend aus Rheologiemodifizierern, Schaumkontrollmitteln, Lumineszenzmitteln, UV-Absorbern, Weichmachern, Verstärkungsfasern, Konservierungsstoffen, Farbstoffen, Härtungsinitiatoren, organischen Pigmenten, anorganischen Pigmenten außer den metallischen Pigmentflocken und Perlglanzpigmentflocken, und Kombinationen davon.

**6.** Dreidimensionales Kunststoffprodukt (1) nach einem der Ansprüche 1 bis 5, wobei die metallischen Pigmentflocken und Perlglanzpigmentflocken aus der Gruppe ausgewählt sind, bestehend aus:

(I) Metallpigmentflocken oder Glimmerpigmentflocken, die optional mit mindestens einer Schicht einer oder mehreren Komponenten beschichtet sind, die aus der Gruppe ausgewählt sind, bestehend aus Metalloxiden, Metallen, Metallsulfiden, Titansuboxiden, Titanoxynitriden, FeO(OH), $SiO_2$, $B_2O_3$, $GeO_2$, $MgF_2$, Metalllegierungen, Seltenerdverbindungen, und optional mit einer Außenschicht, umfassend ein oder mehrere Färbemittel und ein Bindemittel, beschichtet sind;
(II) Pigmentflocken, umfassend $Al_2O_3$-, $SiO_2$-, Glas-, Keramik-, Graphit- oder Glimmerplättchen, die mit mindestens einer Schicht einer oder mehrerer Komponenten beschichtet sind, die aus der Gruppe ausgewählt sind, bestehend aus Metalloxiden, Metallen, Metallsulfiden, Titansuboxiden, Titanoxynitriden, FeO(OH), $SiO_2$, $B_2O_3$, $GeO_2$, Metalllegierungen, Seltenerdverbindungen, und optional mit einer Außenschicht, umfassend ein oder mehrere Färbemittel und ein Bindemittel, beschichtet sind;
(III) Pigmentflocken, umfassend $Al_2O_3$-Plättchen, die mit einer oder mehreren Komponenten dotiert sind, die aus der Gruppe ausgewählt sind, bestehend aus $TiO_2$, $ZrO_2$, $SiO_2$, $SnO_2$, $In_2O_3$, ZnO und Eisenoxid, die mit mindestens einer Schicht einer oder mehrerer Komponenten beschichtet sind, die aus der Gruppe ausgewählt sind, bestehend aus Metalloxiden, Metallen, Metallsulfiden, Titansuboxiden, Titanoxynitriden, FeO(OH), $SiO_2$, $B_2O_3$, $GeO_2$, Metalllegierungen, Seltenerdverbindungen, und optional mit einer Außenschicht, umfassend ein oder mehrere Färbemittel und ein Bindemittel, beschichtet sind.

**7.** Dreidimensionales Kunststoffprodukt (1) nach einem der Ansprüche 1 bis 6, wobei die kugelförmigen Glasperlen einen Brechungsindex, gemessen bei einer Wellenlänge $\lambda$ von 589 nm, zwischen 2,0 und 2,6, vorzugsweise zwischen 2,1 und 2,4, aufweisen.

**8.** Dreidimensionales Kunststoffprodukt (1) nach einem der Ansprüche 1 bis 7, umfassend ein thermoplastisches Polymer, wobei das thermoplastische Polymer aus der Gruppe ausgewählt ist, bestehend aus Homopolymeren und Copolymeren von Polyethylen (PE, LDPE, HDPE, LLDPE), Polypropylen (PP), Polyvinylchlorid (PVC), Polystyrol (PS), Polymethylmethacrylat (PMMA), Polyamid (PA), Polyoxymethylen (POM), Polycarbonat (PC), Polyethylenterephthalat (PET), Polyethylenterephthalatglycol (PETG), Polysulfon (PSU), Polyimid (PI), Polybuten (PB), Polyetheretherketon (PEEK), Poly(acrylnitril-Butadien-Styrol) (ABS), Poly(acrylnitril-Butadien-Acrylat) (ABA), Poly(acryl-Styrol-Acrylnitril) (ASA), Poly(milchsäure) (PLA), Nylon und Mischungen davon.

**9.** Dreidimensionales Kunststoffprodukt (1) nach einem der Ansprüche 1 bis 7, umfassend ein duroplastisches Polymer, wobei das duroplastische Polymer aus der Gruppe ausgewählt ist, bestehend aus Phenolformaldehyd (PF), Harnstoffformaldehyd (UF), Melaminformaldehyd (MF), Epoxiden (EP), Polyurethanen (PU) und ungesättigtem Polyester (UP).

**10.** Dreidimensionales Kunststoffprodukt (1) nach einem der Ansprüche 1 bis 8, in der Form eines Filaments oder eines Pellets, wobei das Polymer ein thermoplastisches Polymer ist.

**11.** Modifiziertes dreidimensionales Produkt (2), umfassend:

- ein oder mehrere dreidimensionale Kunststoffprodukte (1) nach einem der Ansprüche 1 bis 10 und ein(e) oder mehrere weitere Teile oder Komponenten (3), die daran angebracht sind; oder
- ein(e) oder mehrere weitere Teile oder Komponenten (3) und ein oder mehrere dreidimensionale Kunststoffprodukte (1) nach einem der Ansprüche 1 bis 10, die daran angebracht sind,

mit der Maßgabe, dass mindestens ein Teil des einen oder der mehreren retroreflektierenden Außenoberflächenteile (C) der dreidimensionalen Kunststoffprodukte (1) gemäß dem ersten Aspekt durch den/die eine(n) oder die mehreren weiteren Teile oder Komponenten (3) nicht abgedeckt ist.

**12.** Verfahren zum Produzieren des dreidimensionalen Kunststoffprodukts (1) mit retroreflektierenden Eigenschaften nach einem der Ansprüche 1 bis 8 oder 10, wobei das Polymer ein thermoplastisches Polymer ist, das Verfahren umfassend die Schritte:

(a) Bereitstellen des thermoplastischen Polymers, der kugelförmigen Glasperlen, der Pigmentflocken und der optionalen weiteren Inhaltsstoffe;
(b) Zusammenmischen der in Schritt (a) bereitgestellten Inhaltsstoffe bei einer Temperatur oberhalb des Schmelzpunkts des thermoplastischen Polymers;
(c) Bereitstellen der in Schritt (b) erhaltenen Mischung in ein Formwerkzeug oder Extrudieren der in Schritt (b) erhaltenen Mischung; und
(d) Abkühlen der Mischung in dem Formwerkzeug auf eine Temperatur unterhalb des Schmelzpunkts des thermoplastischen Polymers und Entnehmen des dreidimensionalen Kunststoffprodukts (1) mit retroreflektierenden Eigenschaften aus dem Formwerkzeug oder Abkühlen des Extrudats auf eine Temperatur unterhalb des Schmelzpunkts des thermoplastischen Polymers, um das dreidimensionale Kunststoffprodukt (1) mit retroreflektierenden Eigenschaften bereitzustellen.

**13.** Verfahren zum Produzieren des dreidimensionalen Kunststoffprodukts (1) mit retroreflektierenden Eigenschaften nach einem der Ansprüche 1 bis 7 oder 9, wobei das Polymer ein duroplastisches Polymer ist, das Verfahren umfassend die Schritte:

(a) Bereitstellen eines duroplastischen härtbaren Harzes, der kugelförmigen Glasperlen, der Pigmentflocken und der optionalen weiteren Inhaltsstoffe;
(b) Mischen der in Schritt (a) bereitgestellten Inhaltsstoffe;
(c) Bereitstellen der in Schritt (b) erhaltenen Mischung in ein Formwerkzeug;
(d) Aushärten der Mischung in dem Formwerkzeug, um das dreidimensionale Kunststoffprodukt (1) mit retroreflektierenden Eigenschaften bereitzustellen; und
(e) Entnehmen des dreidimensionalen Kunststoffprodukts (1) mit retroreflektierenden Eigenschaften aus dem Formwerkzeug.

**14.** Laser Imaging Detection And Ranging-Verfahren (LIDAR-Verfahren) des dreidimensionalen Kunststoffprodukts (1) nach einem der Ansprüche 1 bis 10 oder des modifizierten dreidimensionalen Produkts (2) nach Anspruch 11, das Verfahren umfassend die Schritte:

(i) Bereitstellen einer LIDAR-Vorrichtung, umfassend eine Quelle elektromagnetischer Strahlung, einen Empfänger und optional ein Global Positioning System (GPS);
(ii) Übertragen elektromagnetischer Strahlung von der Quelle elektromagnetischer Strahlung der LIDAR-Vorrichtung auf das dreidimensionale Kunststoffprodukt (1) oder auf das modifizierte dreidimensionale Produkt (2);
(iii) Abtasten der durch das dreidimensionale Kunststoffprodukt (1) oder durch das modifizierte dreidimensionale Produkt (2) reflektierten elektromagnetischen Strahlung mit dem Empfänger der LIDAR-Vorrichtung; und
(iv) Berechnen, aus den Unterschieden zwischen der übertragenen elektromagnetischen Strahlung und der abgetasteten reflektierten elektromagnetischen Strahlung, vorzugsweise als eine Funktion von Zeit, eines oder mehrerer:

- des Abstands zwischen dem dreidimensionalen Kunststoffprodukt (1) oder dem modifizierten dreidimen-

sionalen Produkt (2) und der LIDAR-Vorrichtung;
• der Beschleunigung des dreidimensionalen Kunststoffprodukts (1) oder des modifizierten dreidimensionalen Produkts (2);
• der Verzögerung des dreidimensionalen Kunststoffprodukts (1) oder des modifizierten dreidimensionalen Produkts (2);
• der Bewegungsrichtung des dreidimensionalen Kunststoffprodukts (1) oder des modifizierten dreidimensionalen Produkts (2);
• der Geschwindigkeit des dreidimensionalen Kunststoffprodukts (1) oder des modifizierten dreidimensionalen Produkts (2), vorzugsweise der Geschwindigkeit relativ zu derjenigen der LIDAR-Vorrichtung; und
• eines 3D-Bilds des dreidimensionalen Kunststoffprodukts (1) oder des modifizierten dreidimensionalen Produkts (2).

**15.** Verwendung des dreidimensionalen Kunststoffprodukts (1) in der Form eines Filaments oder Pellets nach Anspruch 10 bei der Produktion eines gebrauchsfertigen dreidimensionalen Kunststoffprodukts (1) nach einem der Ansprüche 1 bis 8, wobei das Polymer ein thermoplastisches Polymer ist.

**16.** Verwendung des dreidimensionalen Kunststoffprodukts (1) nach einem der Ansprüche 1 bis 10 oder des modifizierten dreidimensionalen Produkts (2) nach Anspruch 11,

• bei dem Laser Imaging Detection And Ranging (LIDAR) des dreidimensionalen Kunststoffprodukts (1) oder des modifizierten dreidimensionalen Produkts (2); und/oder
• um die Sichtbarkeit des dreidimensionalen Kunststoffprodukts (1) oder des modifizierten dreidimensionalen Produkts (2) unter sichtbaren Lichtbedingungen zu verbessern; und/oder
• um ein dreidimensionales Bild des dreidimensionalen Kunststoffprodukts (1) oder des modifizierten dreidimensionalen Produkts (2) zu erstellen.

## Revendications

**1.** Produit plastique tridimensionnel (1) avec une surface externe (A), dans lequel au moins une partie (B) de la surface externe (A) a des propriétés rétroréfléchissantes, dans lequel ledit produit plastique tridimensionnel (1) est constitué, en fonction du poids total du produit plastique tridimensionnel (1), de :

• 25 à 95,9 % en poids d'un polymère choisi parmi des polymères thermoplastiques et thermodurcis ;
• 4 à 70 % en poids de perles de verre sphériques, dans lequel lesdites perles de verre sphériques ont un diamètre médian de particules D50, tel que mesuré par diffraction laser, entre 1 et 150 $\mu$m, et un indice de réfraction, mesuré à une longueur d'onde $\lambda$ de 589 nm, entre 2,0 et 2,8, dans lequel les perles de verre sphériques ne sont pas revêtues de façon hémisphérique d'un revêtement réfléchissant la lumière ;
• 0,1 à 15 % en poids de paillettes de pigment choisies dans le groupe constitué de paillettes de pigment métallique, de paillettes de pigment nacré ou d'une combinaison de celles-ci, lesdites paillettes de pigment ayant un diamètre médian, tel que mesuré par diffraction laser, entre 1 et 75 $\mu$m, dans lequel lesdites paillettes de pigment ont de préférence une épaisseur inférieure à 1 $\mu$m et un rapport d'aspect (diamètre/épaisseur de paillette) d'au moins 10 ; et
• 0 à 15 % en poids d'un ou plusieurs ingrédients supplémentaires,
dans lequel la taille minimale du produit plastique (1) dans toutes les directions est d'au moins 500 $\mu$m, et dans lequel une partie (B) de la surface externe (A) avec des propriétés rétroréfléchissantes comprend une ou plusieurs parties de surface rétroréfléchissantes externes (C) dans lequel les perles de verre sphériques ne dépassent pas de la matrice polymère.

**2.** Produit plastique tridimensionnel (1) selon la revendication 1, dans lequel le diamètre médian desdites paillettes de pigment est supérieur à 35 % du diamètre médian de particules D50 desdites perles de verre sphériques, de préférence supérieur à 38 %, tel que supérieur à 40 %, supérieur à 45 %, supérieur à 50 %, supérieur à 55 %, supérieur à 60 %, supérieur à 70 %, supérieur à 90 %, supérieur à 110 % ou supérieur à 130 %.

**3.** Produit plastique tridimensionnel (1) selon la revendication 1 ou 2, dans lequel la quantité des paillettes de pigment va de 1 partie en poids jusqu'à entre 1 et 80 parties en poids des perles de verre sphériques, de préférence 1 partie en poids jusqu'à entre 1 et 40 parties en poids des perles de verre sphériques, plus préférablement 1 partie en poids jusqu'à entre 1 et 30 parties en poids des perles de verre sphériques.

4. Produit plastique tridimensionnel (1) selon l'une quelconque des revendications 1 à 3, dans lequel le ou les ingrédients supplémentaires ne comprennent pas une ou plusieurs parmi :

- des perles de verre sphériques qui sont revêtues de façon hémisphérique d'un revêtement réfléchissant la lumière ;
- des perles de verre sphériques avec un indice de réfraction, mesuré à une longueur d'onde de 589 nm, de 1,93 ou moins ; et
- des perles de verre sphériques qui sont revêtues d'un matériau qui est répulsif vis-à-vis du polymère.

5. Produit plastique tridimensionnel (1) selon l'une quelconque des revendications 1 à 4, dans lequel les ingrédients supplémentaires sont choisis dans le groupe constitué d'agents modifiant la rhéologie, agents anti-mousse, agents luminescents, absorbeurs d'UV, plastifiants, fibres de renforcement, conservateurs, teintures, initiateurs de durcissement, pigments organiques, pigments inorganiques autres que les paillettes de pigment métallique et les paillettes de pigment nacré, et combinaisons de ceux-ci.

6. Produit plastique tridimensionnel (1) selon l'une quelconque des revendications 1 à 5, dans lequel les paillettes de pigment métallique et les paillettes de pigment nacré sont choisies dans le groupe constitué de :

(I) paillettes de pigment de métal ou paillettes de pigment de mica, facultativement revêtues d'au moins une couche d'un ou plusieurs composants choisis dans le groupe constitué d'oxydes de métal, métaux, sulfures de métal, suboxydes de titane, oxynitrures de titane, FeO(OH), $SiO_2$, $B_2O_3$, $GeO_2$, $MgF_2$, alliages de métaux, composés de terres rares, et facultativement revêtues d'une couche externe comprenant un ou plusieurs colorants et un liant ;
(II) paillettes de pigment comprenant des lamelles d'$Al_2O_3$, de $SiO_2$, de verre, de céramique, de graphite ou de mica revêtues d'au moins une couche d'un ou plusieurs composants choisis dans le groupe constitué d'oxydes de métal, métaux, sulfures de métal, suboxydes de titane, oxynitrures de titane, FeO(OH), $SiO_2$, $B_2O_3$, $GeO_2$, alliages de métaux, composés de terres rares, et facultativement revêtues d'une couche externe comprenant un ou plusieurs colorants et un liant ;
(III) paillettes de pigment comprenant des lamelles d'$Al_2O_3$ dopées avec un ou plusieurs composants choisis dans le groupe constitué de $TiO_2$, $ZrO_2$, $SiO_2$, $SnO_2$, $In_2O_3$, ZnO et oxyde de fer, revêtues d'au moins une couche d'un ou plusieurs composants choisis dans le groupe constitué d'oxydes de métal, métaux, sulfures de métal, suboxydes de titane, oxynitrures de titane, FeO(OH), $SiO_2$, $B_2O_3$, $GeO_2$, alliages de métaux, composés de terres rares, et facultativement revêtues d'une couche externe comprenant un ou plusieurs colorants et un liant.

7. Produit plastique tridimensionnel (1) selon l'une quelconque des revendications 1 à 6, dans lequel lesdites perles de verre sphériques ont un indice de réfraction, mesuré à une longueur d'onde $\lambda$ de 589 nm, entre 2,0 et 2,6, de préférence entre 2,1 et 2,4.

8. Produit plastique tridimensionnel (1) selon l'une quelconque des revendications 1 à 7, comprenant un polymère thermoplastique, dans lequel le polymère thermoplastique est choisi dans le groupe constitué d'homopolymères et copolymères de polyéthylène (PE, LDPE, HDPE, LLDPE), polypropylène (PP), polychlorure de vinyle (PVC), polystyrène (PS), polyméthylméthacrylate (PMMA), polyamide (PA), polyoxyméthylène (POM), polycarbonate (PC), téréphtalate de polyéthylène (PET), téréphtalate de polyéthylène glycol (PETG), polysulfone (PSU), polyimide (PI), polybutène (PB), polyéther-éther-cétone (PEEK), poly(acrylonitrile-butadiène-styrène) (ABS), poly(acrylonitrile-butadiène-acrylate) (ABA), poly(acrylique-styrène-acrylonitrile) (ASA), poly(acide lactique) (PLA), nylon et mélanges de ceux-ci.

9. Produit plastique tridimensionnel (1) selon l'une quelconque des revendications 1 à 7, comprenant un polymère thermodurci, dans lequel le polymère thermodurci est choisi dans le groupe constitué de phénol-formaldéhyde (PF), urée-formaldéhyde (UF), mélamine-formaldéhyde (MF), époxys (EP), polyuréthanes (PU) et polyester insaturé (UP).

10. Produit plastique tridimensionnel (1) selon l'une quelconque des revendications 1 à 8, sous la forme d'un filament ou d'un granulé, dans lequel le polymère est un polymère thermoplastique.

11. Produit tridimensionnel modifié (2) comprenant :

- un ou plusieurs produits plastiques tridimensionnels (1) selon l'une quelconque des revendications 1 à 10 et un ou plusieurs composants ou parties supplémentaires (3) fixés à celui-ci ; ou

• un ou plusieurs composants ou parties supplémentaires (3) et un ou plusieurs produits plastiques tridimensionnels (1) selon l'une quelconque des revendications 1 à 10 fixés à celui-ci,

à condition qu'au moins une partie de la ou des parties de surface rétroréfléchissantes externes (C) des produits plastiques tridimensionnels (1) selon le premier aspect ne soit pas couverte par le ou les composants ou parties supplémentaires (3).

**12.** Procédé permettant de produire le produit plastique tridimensionnel (1) avec des propriétés rétroréfléchissantes selon l'une quelconque des revendications 1 à 8 ou 10, dans lequel le polymère est un polymère thermoplastique, ledit procédé comprenant les étapes consistant à :

(a) fournir le polymère thermoplastique, les perles de verre sphériques, les paillettes de pigment et les ingrédients supplémentaires facultatifs ;
(b) formuler les ingrédients fournis à l'étape (a) à une température supérieure au point de fusion du polymère thermoplastique ;
(c) fournir le mélange obtenu à l'étape (b) dans un moule ou extruder le mélange obtenu à l'étape (b) ; et
(d) refroidir le mélange dans le moule à une température inférieure au point de fusion du polymère thermoplastique et retirer le produit plastique tridimensionnel (1) avec des propriétés rétroréfléchissantes hors du moule ou refroidir l'extrudat à une température inférieure au point de fusion du polymère thermoplastique pour fournir le produit plastique tridimensionnel (1) avec des propriétés rétroréfléchissantes.

**13.** Procédé permettant de produire le produit plastique tridimensionnel (1) avec des propriétés rétroréfléchissantes selon l'une quelconque des revendications 1 à 7 ou 9, dans lequel le polymère est un polymère thermodurci, ledit procédé comprenant les étapes consistant à :

(a) fournir une résine durcissable thermodurcie, les perles de verre sphériques, les paillettes de pigment et les ingrédients supplémentaires facultatifs ;
(b) mélanger les ingrédients fournis à l'étape (a) ;
(c) fournir le mélange obtenu à l'étape (b) dans un moule ;
(d) durcir le mélange dans le moule pour fournir le produit plastique tridimensionnel (1) avec des propriétés rétroréfléchissantes ; et
(e) retirer le produit plastique tridimensionnel (1) avec des propriétés rétroréfléchissantes hors du moule.

**14.** Procédé de détection et télémétrie par imagerie laser (LIDAR) du produit plastique tridimensionnel (1) selon l'une quelconque des revendications 1 à 10 ou du produit tridimensionnel modifié (2) selon la revendication 11, ledit procédé comprenant les étapes consistant à :

(i) fournir un dispositif LIDAR comprenant une source de rayonnement électromagnétique, un récepteur et facultativement un système de positionnement global (GPS) ;
(ii) transmettre un rayonnement électromagnétique de la source de rayonnement électromagnétique du dispositif LIDAR au produit plastique tridimensionnel (1) ou au produit tridimensionnel modifié (2) ;
(iii) balayer le rayonnement électromagnétique réfléchi par le produit plastique tridimensionnel (1) ou par le produit tridimensionnel modifié (2) avec le récepteur du dispositif LIDAR ; et
(iv) calculer à partir des différences entre le rayonnement électromagnétique transmis et le rayonnement électromagnétique réfléchi balayé, de préférence en fonction du temps, une ou plusieurs parmi :

• la distance entre le produit plastique tridimensionnel (1) ou le produit tridimensionnel modifié (2) et le dispositif LIDAR ;
• l'accélération du produit plastique tridimensionnel (1) ou du produit tridimensionnel modifié (2) ;
• la décélération du produit plastique tridimensionnel (1) ou du produit tridimensionnel modifié (2) ;
• la direction de déplacement du produit plastique tridimensionnel (1) ou du produit tridimensionnel modifié (2) ;
• la vitesse du produit plastique tridimensionnel (1) ou du produit tridimensionnel modifié (2), de préférence la vitesse par rapport à celle du dispositif LIDAR ; et
• une image 3D du produit plastique tridimensionnel (1) ou du produit tridimensionnel modifié (2).

**15.** Utilisation du produit plastique tridimensionnel (1) sous la forme d'un filament ou d'un granulé selon la revendication 10, dans la production d'un produit plastique tridimensionnel (1) prêt à l'emploi selon l'une quelconque des

revendications 1 à 8, dans laquelle le polymère est un polymère thermoplastique.

16. Utilisation du produit plastique tridimensionnel (1) selon l'une quelconque des revendications 1 à 10 ou du produit tridimensionnel modifié (2) selon la revendication 11,

- dans une détection et une télémétrie par imagerie laser (LIDAR) dudit produit plastique tridimensionnel (1) ou dudit produit tridimensionnel modifié (2) ; et/ou
- pour améliorer la visibilité dudit produit plastique tridimensionnel (1) ou dudit produit tridimensionnel modifié (2) dans des conditions de lumière visible ; et/ou
- pour préparer une image tridimensionnelle dudit produit plastique tridimensionnel (1) ou dudit produit tridimensionnel modifié (2).

*Fig. 1*

(1)
(B)
(A)
(C)
(C)
(A)
height
width
length
(A)

*Fig. 2A*

(1)
(B)
(A)
(B)
(B)
(C)
(B)
(B)
(C)
(B)
(A)
height
width
length
(A)

*Fig. 2B*

(1)
(B)
(A)
(B)
(B)
(C)
(B)
(C)
(A)
height
length
width
(A)

*Fig. 3*

(3)
(2)
(A)
height
(B), (C)
(A)
length
width
(1)

*Fig. 4*

(B)
(3)
(2)
(A)
height
(C)
(C)
(A)
length
width
(A)
(1)

*Fig. 5*

(B), (C)
(1)
4
4
4
5
4
4
4
5
4

*Fig. 6*

(B), (C)
(1)
4
4
4
4
4
4
4
5
5
5

*Fig. 7*

V2
V5
V9
V11
V13
V2
V6
V10
V12
V14
V2
V15
V17
V18
V19
V2
V20
V22
V23
V24
V2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102016001026 A1
- WO 2005033194 A1
- WO 2014109564 A1
- US 4082427 A
- US 2019044679 A1
- EP 2799398 B1
- US 6267810 B1
- EP 0763573 B1


### Non-patent literature cited in the description


- **B. ARKLES et al.** Silane Coupling Agents - Connecting Across Boundaries. Gelest, Inc., 2014
- The game-changing industry system SWARCO-FORCE. *SWARCO Advanced Industry Systems*, May 2020